# EUROPEAN PATENT APPLICATION

(11) **EP 4 579 807 A1**
(43) Date of publication of application: **02.07.2025**
(21) Application number: 22966992.4
(22) Date of filing: 09.12.2022
(51) Int. Cl.: H01M 4/505, H01M 4/525, H01M 10/0525

(54) **LITHIUM-MANGANESE-NICKEL COMPOSITE OXIDE AND PREPARATION METHOD THEREFOR, ELECTRODE SHEET, BATTERY, AND ELECTRICAL APPARATUS**

(30) Priority: 30.11.2022 WO PCT/CN2022/135597
(71) Applicant: Contemporary Amperex Technology (Hong Kong) Limited, Hong Kong (HK)
(72) Inventor: ZHANG, Zhenguo, Ningde City Fujian 352100 (CN); WANG, Sihui, Ningde City Fujian 352100 (CN); LIN, Wenzhong, Ningde City Fujian 352100 (CN); FAN, Jingpeng, Ningde City Fujian 352100 (CN); YAO, Zhijie, Ningde City Fujian 352100 (CN); LIU, Na, Ningde City Fujian 352100 (CN)
(74) Representative: Gong, Jinping
(86) International application number: PCT/CN2022/138059
(87) International publication number: WO 2024/113406

(57) **Abstract**

The present application discloses a lithium-manganese-nickel-containing composite oxide and a preparation method therefor, a positive electrode plate, a battery, and a power consuming device. The lithium-manganese-nickel composite oxide is in a spinel crystal form, and the ratio of the peak intensity I₁₁₁ of the (111) peak to the peak intensity I₄₀₀ of the (400) peak in an X-ray diffraction pattern of the lithium-manganese-nickel composite oxide is 2.1 ≤ I₁₁₁/I₄₀₀ ≤ 3.3, wherein the diffraction angle of the (111) peak is 20 = 18° - 19.5°, and the diffraction angle of the (400) peak is 20 = 43.5° - 45°. In the above manner, the technical solution of the present application can improve the stability of the positive electrode active material, thereby improving the overall performance of the battery.

## Description

### Technical Field

The present application relates to the technical field of new energy, and in particular, to a lithium-manganese-nickel composite oxide and a preparation method therefor, a positive electrode plate, a battery, and a power consuming device.

### Background Art

Lithium ion batteries have the advantages of high voltage, light weight, long cycling life, no memory effect, high safety, etc., and can be widely used in digital products such as mobile phones, digital cameras, notebook computers, etc., and power tools such as electric vehicles, hybrid electric vehicles, etc. A lithium ion battery comprises a positive electrode material, a negative electrode material, a separator, an electrolyte solution, a current collector, etc. Among them, the positive electrode material is the key to restrict the overall performance and cost of the lithium ion battery. A spinel-type lithium-manganese-nickel composite oxide can be used as a positive electrode material in a battery. However, the spinel-type lithium-manganese-nickel composite oxide has a high lithium deintercalation potential, which causes serious side reactions between the positive electrode material and the electrolyte solution. The electrolyte solution is consumed to produce a large amount of gas, which increases a risk of cell swelling and accelerates capacity decay. Moreover, the positive electrode material undergoes ion dissolution due to the side reactions, in which Mn²⁺ is dissolved more. The dissolved Mn²⁺ will be deposited on the surface of the negative electrode, destroying the SEI film (Solid Electrolyte Interface) and accelerating the capacity decay of the negative electrode and the battery.

### Summary of the invention

The technical problem mainly solved by the present application is to provide a spinel-type lithium-manganese-nickel composite oxide and a preparation method therefor, a positive electrode plate, a battery, and a power consuming device, which can improve the stability of the positive electrode active material, thereby improving the capacity of the battery.

In order to solve the above technical problem, a technical solution adopted by the present application is to: provide a spinel-type lithium-manganese-nickel composite oxide. the lithium-manganese-nickel composite oxide is in a spinel crystal form, and the ratio of the peak intensity I₁₁₁ of the (111) peak to the peak intensity I₄₀₀ of the (400) peak in an X-ray diffraction pattern of the lithium-manganese-nickel composite oxide is 2.1 ≤ I₁₁₁/I₄₀₀ ≤ 3.3, wherein the diffraction angle of the (111) peak is 2θ = 18° - 19.5°, and the diffraction angle of the (400) peak is 2θ = 43.5° - 45°.

In some embodiments, the average chemical composition of the lithium-manganese-nickel composite oxide is Li₁₊ₐMₓNi_{0.5+z}Mn_{1.5-x-z}O₄₋ₖ, wherein 0 < a ≤ 0.3, 0 < x ≤ 0.2, -0.3 ≤ z ≤ 0.3, 0 ≤ k ≤ 0.2, and M includes one or more elements of Na, Si, P, S, Nb, Mo, Ru, Te, Ce, Ta, and W.

In some embodiments, the average chemical composition of the lithium-manganese-nickel composite oxide is Li₁₊ₐMₓN_{y}Ni_{0.5+z}Mn_{1.5-x-y-z}O_{4-k-q}O_{q}, wherein 0 < a ≤ 0.3, 0 < x ≤ 0.2, 0 ≤ y ≤ 0.3, -0.3 ≤ z ≤ 0.3, 0 ≤ k ≤ 0.2, 0 ≤ q ≤ 0.5, M includes one or more elements of Na, Si, P, S, Nb, Mo, Ru, Te, Ce, Ta, and W, N includes one or more elements of Mg, Al, K, Sc, Ti, V, Cr, Fe, Co, Rb, Sr, Y, Zr, Rh, Sb, La, Sm, Gd, Yb, Lu, and Hf, and Q includes one or more elements of F, Cl, Br, and I.

In some embodiments, 1 ≤ a/x ≤ 20.

In some embodiments, 0.03 ≤ a ≤ 0.15.

In some embodiments, 0.002 ≤ x ≤ 0.1.

In some embodiments, the lithium-manganese-nickel composite oxide has at least one peak at a diffraction angle of 2θ = 21.5° - 24° in the X-ray diffraction pattern, and the ratio of the intensity of the strongest peak at the diffraction angle of 20 = 21.5° - 24° to the intensity of the (111) peak is 0 < I_{(21.5°-24°)}/I₁₁₁ ≤ 3%.

In some embodiments, when a battery having the lithium-manganese-nickel composite oxide as a positive electrode material and Li as a negative electrode material is charged at a charging rate of 0.1 C, the ratio of the charge capacity of the battery in a range of 3.5-4.4 V to a total charge capacity in a range of 3.5-4.95 V is less than or equal to 15%.

In some embodiments, 0 ≤ x + y + z ≤ 0.3.

In some embodiments, 2.4 ≤ I₁₁₁/I₄₀₀ ≤ 2.8; 2 ≤ a/x ≤ 10; 0.05 ≤ a ≤ 0.12; 0.01 ≤ x ≤ 0.06; 0.005 ≤ y ≤ 0.05; 0.01 ≤ z ≤ 0.1; 0.01 ≤ x + y + z ≤ 0.1; 0.01 ≤ q ≤ 0.1; and 0 ≤ k ≤ 0.1.

In some embodiments, the lithium-manganese-nickel composite oxide comprises one or more of single crystal particles, quasi-single crystal particles, and polycrystal particles.

In some embodiments, the number of crystal grains contained in one single crystal particle/quasi-single crystal particle is 1 ≤ n ≤ 8.

In some embodiments, the crystal grains have a shape including one or more of a spheroid, an octahedron, an octahedron-truncated regular shape, an octahedron with rounded edges, and/or an octahedron-truncated polyhedral regular shape with rounded edges.

In some embodiments, the lithium-manganese-nickel composite oxide has a volume median particle size of 2 µm ≤ D_{V50} ≤ 20 µm.

In some embodiments, the lithium-manganese-nickel composite oxide has a powder pH of 10 ≤ pH ≤ 12.

In some embodiments, the lithium-manganese-nickel composite oxide has a specific surface area of 0 < BET ≤ 0.8 m²/g.

In order to solve the above technical problem, another technical solution adopted by the present application is to: provide a positive electrode plate, comprising a positive electrode material and a positive electrode current collector. The positive electrode material comprises any one of the lithium-manganese-nickel composite oxide described above.

In order to solve the above technical problem, another technical solution adopted by the present application is to: provide a battery, comprising: a positive electrode plate, a separator, and a negative electrode plate. The separator is located between the positive electrode plate and the negative electrode plate for isolation, and the positive electrode plate includes any one of the positive electrode plate described above.

In some embodiments, the battery further comprises an electrolyte solution, and the electrolyte solution comprises a solvent including one or more of fluorocarbonates, fluorocarboxylates, sulfones, and fluoroethers.

In order to solve the above technical problem, another technical solution adopted by the present application is to: provide a method for preparing a lithium-manganese-nickel composite oxide, comprising: providing raw material of a lithium-manganese-nickel composite oxide; and subjecting the raw material of the lithium-manganese-nickel composite oxide to a heat treatment under an oxygen-containing atmosphere to obtain any one of the lithium-manganese-nickel composite oxide described above.

In some embodiments, the subjecting the raw material of the lithium-manganese-nickel composite oxide to a heat treatment under an oxygen-containing atmosphere comprises: heating the raw material of the lithium-manganese-nickel composite oxide to T1, and keeping the temperature for 2-50 h to obtain a lithium-manganese-nickel composite oxide intermediate, wherein 850°C ≤ T1 ≤ 1 100°C.

In some embodiments, the method for preparing a lithium-manganese-nickel composite oxide further comprising: heating the lithium-manganese-nickel composite oxide intermediate to T2, and keeping the temperature for 0.5-20 h to obtain a lithium-manganese-nickel composite oxide preform, wherein T1-200°C ≤ T2 ≤ T1, and T2 ≥ 800°C.

In some embodiments, the method for preparing a lithium-manganese-nickel composite oxide further comprising: heating the lithium-manganese-nickel composite oxide preform to T3, and keeping the temperature for 5-30 h to obtain the lithium-manganese-nickel composite oxide, wherein 500°C ≤ T3 ≤ 800°C.

In some embodiments, the providing the raw material of the lithium-manganese-nickel composite oxide comprises: providing Li₂CO₃, Ni_{0.5+z}Mn_{1.5-x-z}(OH)₄₋₂ₓ and M_{b}O_{c} powders in a stoichiometric ratio according to a target composition of Li₁₊ₐMₓNi_{0.5+z}Mn_{1.5-x-z}O₄₋ₖ, and uniformly mixing same to obtain the raw material of the lithium-manganese-nickel composite oxide, wherein 0 < a ≤ 0.3, 0 < x ≤ 0.2, -0.3 ≤ z ≤ 0.3, 0 ≤ k ≤ 0.2, and M includes one or more elements of sodium (Na), silicon (Si), phosphorus (P), sulfur (S), niobium (Nb), molybdenum (Mo), ruthenium (Ru), tellurium (Te), cerium (Ce), tantalum (Ta), and tungsten (W).

The present application has the following beneficial effects: different from the prior art, in the present application, by adjusting the ratio I₁₁₁/I₄₀₀ of intensities of characteristic peaks of the spinel-type lithium-manganese-nickel composite oxide within a preferred range, the structural stability of the lithium-manganese-nickel composite oxide can be improved, thereby reducing the reactivity of the lithium-manganese-nickel composite oxide with the electrolyte solution when used as a positive electrode material, and improving the overall performance of the battery.

### Brief Description of the Drawings

Fig.1 is an X-ray diffraction pattern of some of examples and comparative examples of the present application;
Fig.2 is an X-ray diffraction pattern of some of examples and comparative examples of the present application;
Fig.3 shows the first-cycle charge curves of button batteries of some of examples and comparative examples of the present application;
Fig.4 is a morphology image of a positive electrode active material of Example 3 of the present application achieved by a scanning electron microscope;
Fig.5 is a morphology image of a positive electrode active material of Example 36 of the present application achieved by a scanning electron microscope;
Fig.6 is a morphology image of a positive electrode active material of Example 46 of the present application achieved by a scanning electron microscope;
Fig.7 is a morphology image of a positive electrode active material of Example 47 of the present application achieved by a scanning electron microscope;
Fig.8 is a morphology image of a positive electrode active material of Comparative Example 1 of the present application achieved by a scanning electron microscope.

### Detailed Description of Embodiments

In order to make the objectives, technical solutions and effects of the present application more clear and definite, the present application will be described in detail below with reference to the accompanying drawings and examples.

As used herein, the term "about" is used to describe and illustrate small variations. When being used in combination with an event or situation, the term may refer to an example in which the event or situation occurs precisely, and an example in which the event or situation occurs approximately. For example, when used in conjunction with a numerical value, the terms may refer to a variation range that is less than or equal to ± 10% of the numerical value, such as less than or equal to ± 5%, less than or equal to ± 4%, less than or equal to ± 3%, less than or equal to ± 2%, less than or equal to ± 1%, less than or equal to ± 0.5%, less than or equal to ± 0.1%, or less than or equal to ± 0.05%. In addition, amounts, ratios and other numerical values are sometimes presented herein in range formats. It should be understood that such range formats are for convenience and brevity, and should be flexibly understood as comprising not only values explicitly designated to range limits, but also all individual values or sub-ranges within the ranges, like explicitly specifying each value and sub-range.

In the detailed description and claims, a list of items connected by the term "at least one of" means any combination of the listed items. For example, if items A and B are listed, then the phrase "at least one of A and B" means only A; only B; or A and B. In another example, if items A, B, and C are listed, then the phrase "at least one of A, B, and C" means only A; or only B; only C; A and B (excluding C); A and C (excluding B); B and C (excluding A); or all of A, B, and C. The item A may include a single element or multiple elements. The item B may include a single element or multiple elements. The item C may include a single element or multiple elements.

With the wide application of electrochemical devices (for example, lithium ion batteries), people have higher and higher requirements for their performance, especially the safety, stability, capacity and the like of batteries, and expect batteries to have good overall performance in all aspects. A lithium ion battery comprises a positive electrode, a negative electrode, a separator, an electrolyte solution, etc. The positive electrode comprises a positive electrode current collector and a positive electrode material arranged on the positive electrode current collector. The positive electrode material is the key to restrict the overall performance of the lithium ion battery. However, the existing positive electrode material is easily to undergo serious side reactions with the electrolyte solution, which may cause problems such as increasing the risk of cell swelling, accelerating the capacity decay of the negative electrode and the battery, etc. Generally, the existing problems can be improved by many means such as coating the surface of the positive electrode material, adjusting the structure of the positive electrode material to reduce oxygen defects of the material, increase the particle size of the positive electrode material and reduce the specific surface area of the positive electrode material, and modifying the surface of the positive electrode material to stabilize the surface of the material, reduce the contact between the electrolyte solution and the positive electrode material. However, these means still have some drawbacks.

In order to solve the above technical problems, the present application improves the performance of the lithium-manganese-nickel composite oxide by means of using a spinel-type lithium-manganese-nickel composite oxide as the positive electrode material, adjusting the crystal structure, elemental composition and contents, and preparation process of the lithium-manganese-nickel composite oxide, etc., so as to improve the thermodynamic trend and growth kinetics of the lithium-manganese-nickel composite oxide to a more stable structure, thereby improving the structural stability of the lithium-manganese-nickel composite oxide, and further significantly improving the overall performance of the lithium-manganese-nickel composite oxide as a positive electrode material in a battery, and specifically improving the battery capacity. The lithium-manganese-nickel composite oxide refers to an oxide containing lithium, manganese, and nickel, that is, in addition to lithium, manganese, and nickel, the oxide may further include other elements, so the lithium-manganese-nickel composite oxide is also called a lithium-manganese-nickel-containing composite oxide.

In some embodiments, the lithium-manganese-nickel composite oxide is in a spinel crystal form, and the ratio of the peak intensity I₁₁₁ of the (111) peak to the peak intensity I₄₀₀ of the (400) peak in an X-ray diffraction pattern of the lithium-manganese-nickel composite oxide is 2.1 ≤ I₁₁₁/I₄₀₀ ≤ 3.3. The diffraction angle of the (111) peak is 20 = 18° - 19.5°, and the diffraction angle of the (400) peak is 20 = 43.5° - 45°.

The lithium-manganese-nickel composite oxide may be tested by a X-ray powder diffractometer using CuKα1 ray according to the standard JIS K 0131-1996. In an X-ray diffraction (XRD) pattern, the (111) peak (peak position 2θ = 18° - 19.5°) is the peak of the preferred growth basal plane of the lithium-manganese-nickel composite oxide crystal, and the (400) peak (peak position 20 = 43.5° - 45°) is the peak of the growth end plane of the lithium-manganese-nickel composite oxide crystal. The end plane herein is the theoretical end plane of growth. By adjusting the ratio of intensities of characteristic peaks of the lithium-manganese-nickel composite oxide within this range, the structural stability of the lithium-manganese-nickel composite oxide can be improved, thereby reducing the reactivity of the lithium-manganese-nickel composite oxide with the electrolyte solution when used as a positive electrode material, and improving the overall performance of the battery.

In an embodiment, the first preferred growth crystal plane of the spinel-type lithium-manganese-nickel-containing composite oxide is the (111) plane, that is, atoms spread and grow layer by layer along the (111) plane, so the stacking quality of the (111) plane determines the stability of the crystal structure. A spinel-type lithium-manganese-nickel-containing composite oxide crystal grain may have a plurality of (111) planes (for example, eight sides in an octahedron grain shape) growing separately at the same time, and the crystal planes contact each other to form (a00) sides. Therefore, the (111) plane may be called the "basal plane" of the spinel structure, and the (a00) plane may be called the "end plane" of the spinel structure. In the XRD pattern, the ratio of the peak intensity of the basal plane (111) to the peak intensity of the end plane (a00) is E=I₁₁₁/Iₐ₀₀. E may indicate the preferred degree of the crystal plane (111). The greater the E value, the greater the preferred degree of the (111) plane, and the lower the energy of the (111) plane, so that the (111) plane can be stacked more smoothly and the overall structure of the spinel-type lithium-manganese-nickel-containing composite oxide is more stable, thus improving the stability of the battery using this material. However, if the E value is too large, the crystal structure will be too stable, which will cause lithium ions (Li⁺) becomes difficult to deintercalate and is not beneficial to the dynamic performance and capacity of the battery. Therefore, E may also be called the crystal plane preferred index to characterize the stability of the crystal structure. In the conventional XRD pattern, the (111) peak and the (400) peak are two of the three strong peaks with high intensity. In the present application, the (111) peak and the (400) peak are selected as the characteristic peaks to measure the E value, that is, E = I₁₁₁/I₄₀₀.

In a preferred embodiment, 2.3 ≤ I₁₁₁/I₄₀₀ ≤ 3.0. Further preferably, 2.4 ≤ I₁₁₁/I₄₀₀ ≤ 2.8. For example, I₁₁₁/I₄₀₀ may be 2.2, 2.5, 2.6, 2.7, 2.9, etc. By controlling the value of the crystal plane preferred index E within this range, the reactivity of the lithium-manganese-nickel composite oxide with the electrolyte solution can be reduced while satisfying the requirements for the dynamic performance and capacity of the battery, thereby improving the stability of the battery.

In some embodiments, the crystal growth direction and the structural stability of the lithium-manganese-nickel composite oxide may be adjusted by adjusting the composition and contents of the elements contained in the lithium-manganese-nickel composite oxide. That is, the E value may be adjusted by adjusting the composition and contents of the elements contained in the lithium-manganese-nickel composite oxide.

In some embodiments, the average chemical composition of the lithium-manganese-nickel composite oxide is Li₁₊ₐMₓNi_{0.5+z}Mn_{1.5-x-z}O₄₋ₖ, wherein 0 < a ≤ 0.3, 0 < x ≤ 0.2, -0.3 ≤ z ≤ 0.3, 0 ≤ k ≤ 0.2, and M includes one or more elements of sodium (Na), silicon (Si), phosphorus (P), sulfur (S), niobium (Nb), molybdenum (Mo), ruthenium (Ru), tellurium (Te), cerium (Ce), tantalum (Ta), and tungsten (W).

In the lithium-manganese-nickel composite oxide provided by the present application, the Li content in the oxide is increased, that is, the ratio of the molar content of the element at the Li site to the element at the Ni/Mn site is greater than 0.5. Increasing the Li content is beneficial to the thermodynamic trend of the spinel-type lithium-manganese-nickel-containing composite oxide to grow towards a stable structure. Specifically, the increase of the Li content can promote the increase of the valence of Mn in the spinel structure, improve the bonding strength of the Mn-O bond, and reduce the side reactions between the spinel-type lithium-manganese-nickel-containing composite oxide and the electrolyte solution. That is, the increased Li can enter the Mn site in an appropriate amount to form Li doping, which improves the structural stability of the material and thus reduces the side reactions with the electrolyte solution. However, there is a contradiction between the thermodynamic trend and growth kinetics (that is, the kinetic trend of growth) of the spinel-type lithium-manganese-nickel-containing composite oxide to grow towards a more stable structure. Therefore, the increase of the Li content will reduce the preferred degree of the (111) plane, that is, reducing the E value means reducing the kinetics of the spinel-type lithium-manganese-nickel-containing composite oxide to grow towards a stable structure. In other words, increasing the Li content can improve the thermodynamic trend of the spinel-type lithium-manganese-nickel-containing composite oxide to grow towards a stable structure on the one hand, and reduce the kinetics of the spinel-type lithium-manganese-nickel-containing composite oxide to grow towards a stable structure on the other hand, that is, reduce the dynamic trend.

Further, in the present application, the M element is introduced into the lithium-manganese-nickel composite oxide to modify the lithium-manganese-nickel composite oxide, so as to reconcile the contradiction between the thermodynamic trend and growth kinetics of the spinel-type lithium-manganese-nickel-containing composite oxide to grow towards a stable structure, thereby significantly improving the structural stability of the spinel-type lithium-manganese-nickel-containing composite oxide. In other words, the doping of the M element can improve the kinetics of the spinel-type lithium-manganese-nickel-containing composite oxide to grow towards a stable structure, so as to make up for the reduction of the growth kinetics caused by the increase of the Li content.

In some embodiments, M includes one or more elements of sodium (Na), silicon (Si), phosphorus (P), sulfur (S), niobium (Nb), molybdenum (Mo), ruthenium (Ru), tellurium (Te), cerium (Ce), tantalum (Ta), and tungsten (W). Preferably, M includes one or more elements of Si, P, Ru, Te, Ce, and Ta. Further preferably, M includes one or more elements of P, Ru, Te, and Ta. The M element may be distributed in the bulk phase of the spinel-type lithium-manganese-nickel-containing composite oxide or on the surface of the material.

In this embodiment, the selected M element can stabilize the crystal structure of the spinel-type lithium-manganese-nickel-containing composite oxide on the one hand, and capture hydrogen fluoride (HF) in the electrolyte solution on the other hand. Moreover, products of the side reactions are harmless to the battery system, which significantly improves the overall performance of the battery.

In some embodiments, the doped amount x of the M element needs to be matched with the Li content a, so as to better balance the thermodynamic trend and kinetics trend of the crystal growth, i.e., balance the Li content and the E value. To some extent, the more Li, the more element M needs to be doped for conciliation.

In some embodiments, 1 ≤ a/x ≤ 20. In some preferred embodiments, 2 ≤ a/x ≤ 10. For example, a/x may be 4, 6, 8, 11, 12, 15, 17, 19, etc.

In some embodiments, 0.03 ≤ a ≤ 0.15. Preferably, 0.05 ≤ a ≤ 0.12. For example, a may be 0.04, 0.06, 0.08, 0.09, 0.11, 0.13, 0.14, etc.

In some embodiments, 0.002 ≤ x ≤ 0.1. Preferably, 0.01 ≤ x ≤ 0.06. For example, x may be 0.005, 0.008, 0.02, 0.04, 0.05, 0.08, 0.09, etc.

In this embodiment, by controlling the doped amount of the M element and the Li content within such ranges, the improvement effect can be maximized, and the battery capacity, the dynamic performance, and the long-term service performance of the battery using this material can be balanced. For example, the service life of the battery can be prolonged.

In some embodiments, the average chemical composition of the lithium-manganese-nickel composite oxide is Li₁₊ₐMₓN_{y}Ni_{0.5+z}Mn_{1.5-x-y-z}O_{4-k-q}Q_{q}, wherein 0 < a ≤ 0.3, 0 < x ≤ 0.2, 0 ≤ y ≤ 0.3, -0.3 ≤ z ≤ 0.3, 0 ≤ k ≤ 0.2, 0 ≤ q ≤ 0.5, M includes one or more elements of Na, Si, P, S, Nb, Mo, Ru, Te, Ce, Ta, and W, N includes one or more elements of magnesium (Mg), aluminum (Al), potassium (K), scandium (Sc), titanium (Ti), vanadium (V), chromium (Cr), iron (Fe), cobalt (Co), rubidium (Rb), strontium (Sr), yttrium (y), zirconium (Zr), rhodium (Rh), antimony (Sb), lanthanum (La), samarium (Sm), gadolinium (Gd), ytterbium (Yb), lutetium (Lu), and hafnium (Hf), and Q includes one or more elements of fluorine (F), chlorine (Cl), bromine (Br), and iodine (I). The N and Q elements may be distributed in the bulk phase of the spinel-type lithium-manganese-nickel-containing composite oxide or on the surface of the material.

The N element is an element that can enter the Li site and/or the Mn site and/or the Ni site. In some preferred embodiments, N includes one or more elements of K, Rb, Sr, Y, Rh, Sb, La, Sm, Gd, Yb, Lu, and Hf.

In this embodiment, the N element is doped into the spinel-type lithium-manganese-nickel-containing composite oxide as other cations. The introduction of these elements is beneficial for E value to reach the required range, so as to improve the structural stability of the spinel-type lithium-manganese-nickel-containing **composite** oxide and slow down the side reactions between the material and the electrolyte solution. The preferred elements have the most obvious improvement effect.

**In** some preferred embodiments, 0 < y ≤ 0.3, further preferably, 0.001 ≤ y ≤ 0.1, and more preferably, 0.005 ≤ y ≤ 0.05. For example, y may be 0.003, 0.008, 0.01, 0.07, 0.13, 0.19, 0.25, etc. By controlling the doped amount of the N element within this range, the improvement effect can be maximized, and the battery capacity, the dynamic performance, and the long-term service performance of the battery using this material can be balanced.

**In** some preferred embodiments, 0.01 ≤ z ≤ 0.1. For example, z may be 0.02, 0.03, 0.04, 0.05, 0.06, 0.07, 0.08, etc. That is, the Ni content is also increased. The increased Ni is beneficial to increase the average valence of Mn and stabilize the structure. The increased Ni can also form a rock-salt phase on the surface of the crystal grains to protect the manganese-rich bulk phase and reduce the probability of Mn dissolution.

In some preferred embodiments, 0 < x + y + z ≤ 0.3. Further preferably, 0.005 ≤ x + y + z ≤ 0.2. More preferably, 0.01 ≤ x + y + z ≤ 0.1. For example, x + y + z may be 0.008, 0.03, 0.06, 0.09, 0.16, 0.21, 0.27, etc. In this embodiment, the total doped amount of cations is limited. By controlling the total doped amount of cations within this range, the capacity and dynamic performance of the material and the service life of the battery using this material can be balanced.

In some preferred embodiments, 0 < q ≤ 0.5, further preferably, 0.001 ≤ q ≤ 0.2, and more preferably, 0.01 ≤ q ≤ 0.1. For example, q may be 0.006, 0.03, 0.07, 0.13, 0.18, 0.24, 0.33, 0.42, etc. When the doped amount of anions is controlled within this range, the improvement effect can be maximized.

In some preferred embodiments, 0 ≤ k ≤ 0.1. For example, k may be 0.003, 0.005, 0.007, 0.009, etc. By controlling the oxygen content, oxygen defects of the material can be reduced. The reduction of oxygen defects is beneficial to improve the structural stability of the material and slow down the side reactions between the material and the electrolyte solution.

In some embodiments, the lithium-manganese-nickel composite oxide has at least one peak at a diffraction angle of 2θ = 21.5° - 24° in the X-ray diffraction pattern, and the ratio of the intensity of the strongest peak at the diffraction angle of 20 = 21.5° - 24° to the intensity of the (111) peak is 0 < I_{(21.5°-24°)}/I₁₁₁ ≤ 3%. Preferably, 0.2% ≤ I_{(21.5°-24°)}/I₁₁₁ ≤ 2%, and more preferably, 0.5% ≤ I_{(21.5°-24°)}/I₁₁₁ ≤ 1.5%. For example, I_{(21.5°-24°)}/I₁₁₁ may be 0.3%, 0.8%, 1.2%, 1.7%, 2.6%, etc.

By adjusting the types of modifying elements (the M element, the N element, and the Q element), the element distribution, and the doped amounts of the modifying elements, the peak position and the peak intensity between 21.5° and 24° can be adjusted. The inventors of the present application have found through research that the higher the peak intensity of the peak between 21.5° and 24°, the more beneficial it is to prolong the service life of the battery using this material, but when the peak intensity exceeds a certain value, the battery capacity drops sharply and the service life deteriorates. Therefore, in the solution of the present application, while adjusting the types and amounts of the doped elements in the lithium-manganese-nickel composite oxide, the E value and the ratio of the intensity of the peak between 21.5° and 24° to the intensity of the (111) peak need to be taken into account, in order to better adjust the overall performance of the battery. The composition and contents of the preferred material obtained have been described in detail above.

In some embodiments, when a battery having the lithium-manganese-nickel composite oxide as a positive electrode material and Li as a negative electrode material is charged at a charging rate of 0.1 C, a ratio R of a charge capacity in a range of 3.5-4.4 V to a total charge capacity in a range of 3.5-4.95 V is less than or equal to 15%. Preferably, R is less than or equal to 10%. More preferably, 4% ≤ R ≤ 10%. For example, R may be 1%, 3%, 5%, 6%, 7%, 8%, 9%, 12%, 14%, etc.

When a button battery having the spinel-type lithium-manganese-nickel-containing composite oxide material as a positive electrode material and Li as a negative electrode material is charged at a constant current with a small rate of 0.1 C, the ratio of the charge capacity in the range of 3.5-4.4 V to the total charge capacity in the range of 3.5-4.95 V is called the 4 V platform ratio. A larger 4 V platform ratio R indicates a higher Mn³⁺ content, which also means a decrease of the average charge/discharge voltage. The increase of the Mn³⁺ content will increase the risk of Mn dissolution, and the decrease of the average discharge voltage means a decrease of the energy density. Therefore, the R value needs to be controlled not to be too large. However, the inventors of the present application have found through research that when the E value of the spinel-type lithium-manganese-nickel-containing composite oxide increases, R will increase. A balance between the two values can make the battery have higher overall performance. The inventors of the present application have found through further research that adjusting the types and amounts of the doped M element can balance the E value and the R value, and reasonably adjusting the types and amounts of the doped M element can increase the E value, but the R value will not increase and even decrease. Further, the composition of preferred material is obtained. The specific composition and contents have been described in detail above.

In some embodiments, the lithium-manganese-nickel composite oxide comprises one or more of single crystal particles, quasi-single crystal particles, and polycrystal particles.

The particles inside the single crystal are regularly and periodically arranged in the three-dimensional space, or the whole crystal is composed of the same space lattices in the three-dimensional direction, and the point masses in the whole crystal are arranged in a long-range order in space. The quasi-single crystal particle contains only a few or a dozen crystal grains. The polycrystal particle contains dozens or more crystal grains.

In some embodiments, the crystal grains of the lithium-manganese-nickel composite oxide have a shape including one or more of a spheroid, an octahedron, an octahedron-truncated regular shape, an octahedron with rounded edges, and/or an octahedron-truncated polyhedral regular shape with rounded edges. Preferably, the crystal grains have a shape of an octahedron with rounded edges and/or an octahedron-truncated polyhedral regular shape with rounded edges.

The surface of the crystal grains in an octahedron or an octahedron-truncated polyhedral regular shape is a crystal plane that is more beneficial to Li⁺ conduction, resulting in better capacity and dynamic performance. The crystal grains in a spheroid can slow down cracking and tendency to corrosion caused by stress concentration, resulting in better subsequent processability of the material and long-term service life of the battery using this material. The rounded octahedron and/or the rounded octahedron-truncated polyhedral regular shape has the advantages of the above, and balances the capacity, dynamic performance and long-term service stability of the material.

In some embodiments, the number of crystal grains contained in one single crystal particle/quasi-single crystal particle is 1 ≤ n ≤ 8, preferably 1 ≤ n ≤ 3. For example, n may be 2, 4, 5, 6, 7, etc.

The surface of the spinel-type lithium-manganese-nickel-containing composite oxide particle is the area where side reactions are mainly occurred. The surface of the spinel-type lithium-manganese-nickel-containing composite oxide crystal grain is the crystal plane where the elements at the Ni/Mn and Ni/Mn sites are the most stable, and the M element dissolved in the spinel-type lithium-manganese-nickel-containing composite oxide mainly enters the Ni/Mn site. Therefore, in the single crystal particle, the M element entering the lattice is the most stable, and the surface coating containing the M element can be well matched with the surface of the substrate, thus maximizing the modification effect of the M element.

In addition, compared with the polycrystal of the same particle size, all the crystal planes on the surface of the single crystal particle are stable, and the single crystal has a small specific surface area and a lower probability of cracking and exposing unstable surfaces during processing and service, which is beneficial to slow down side reactions on the surface. Compared with the polycrystal of the same grain size, the single crystal is more beneficial to the dynamic performance due to its small particle size, and moreover, the single crystal has a low tendency to cracking.

In some embodiments, the lithium-manganese-nickel composite oxide has a volume median particle size of 2 µm ≤ D_{V50} ≤ 20 µm. Preferably, 3 µm ≤ D_{V50} ≤ 15 µm, and more preferably, 5 µm ≤ D_{V50} ≤ 10 µm. For example, D_{V50} may be 4 µm, 6 µm, 8 µm, 13 µm, 18 µm, etc. When the particle size is controlled within this optimized range, the single crystal, the oxygen defects, the specific surface area and other parameters can be better adjusted.

In some embodiments, the lithium-manganese-nickel composite oxide has a powder pH of 10 ≤ pH ≤ 12. Compared with the conventional spinel-type lithium-manganese-nickel-containing composite oxide having a pH of 7-10, the spinel-type lithium-manganese-nickel-containing composite oxide of the present application is more alkaline, and can be neutralized with strong acids generated under high voltage, thereby reducing the surface damage of the positive electrode material. If the alkalinity is too strong, it is not beneficial to the processability, and makes the material easily absorb moisture and react with the binder, which deteriorates the performance of the battery.

In some embodiments, the lithium-manganese-nickel composite oxide has a specific surface area of 0 < BET ≤ 0.8 m²/g. Preferably, 0 < BET ≤ 0.5 m²/g, and more preferably, 0.1 ≤ BET ≤ 0.4 m²/g. For example, the specific surface area may be 0.2 m²/g, 0.3 m²/g, 0.6 m²/g, 0.7 m²/g, etc. The specific surface area may be measured by a gas adsorption method. A smaller specific surface area can slow down the side reactions on the surface. However, the specific surface area is greatly affected by the coated state. For example, the coating of nanoparticles may significantly increase the specific surface area, but the active specific surface area is actually reduced.

In some embodiments, the crystal growth direction and the structural stability of the lithium-manganese-nickel composite oxide may be adjusted by adjusting parameters of the preparation process of the lithium-manganese-nickel composite oxide. That is, the E value may be adjusted by adjusting the parameters of the preparation process of the lithium-manganese-nickel composite oxide.

In some embodiments, the lithium-manganese-nickel composite oxide may be prepared by solid-phase synthesis. A specific preparation method comprises: providing raw material of the lithium-manganese-nickel composite oxide, and subjecting the raw material of the lithium-manganese-nickel composite oxide to a heat treatment under an oxygen-containing atmosphere to obtain the lithium-manganese-nickel composite oxide of any one of the above examples.

The raw material of the lithium-manganese-nickel composite oxide can be prepared according to the composition and contents of the target lithium-manganese-nickel composite oxide. The raw material used are specifically adjusted adaptively according to the types of the doped elements. For example, when the doped cation is a metal cation, the raw material used may be a metal oxide (M_{b}O_{c}) corresponding to the cation. When the doped cation is an inorganic cation, the raw material used may be the corresponding ammonium salt, carbonate, etc, and Li₂CO₃, Ni_{0.5+z}Mn_{1.5-x-z}(OH)₄₋₂ₓ, M_{b}O_{c}, and the like may be used as the raw material of the lithium, manganese and nickel elements.

After powders of the raw material are mixed, same is subjected to a heat treatment under an oxygen-containing atmosphere to obtain the corresponding lithium-manganese-nickel composite oxide. The structure of the obtained lithium-manganese-nickel composite oxide can be made stable by adjusting the heating temperature and time, the atmosphere of the reaction, etc.

In some embodiments, the method for preparing a lithium-manganese-nickel composite oxide comprising:
S110: heating the raw material of the lithium-manganese-nickel composite oxide to T1, and sintering same at the temperature of T1 to obtain a lithium-manganese-nickel composite oxide intermediate;
S120: heating the lithium-manganese-nickel composite oxide intermediate to T2, and sintering same at the temperature of T2 to obtain a lithium-manganese-nickel composite oxide preform; and
S130: heating the lithium-manganese-nickel composite oxide preform to T3, and annealing same to obtain the lithium-manganese-nickel composite oxide.

In some embodiments, 850°C ≤ T1 ≤ 1100°C. Preferably, 900°C ≤ T1 ≤ 1000°C. For example, T1 may be 880°C, 930°C, 950°C, 980°C, 1000°C, 1060°C, etc. The sintering time is 2-50 h. Specifically, the raw material of the lithium-manganese-nickel composite oxide may be heated to T1, and held at the temperature of T1 for 2-50 h, for example, 8 h, 15 h, 23 h, 31 h, 42 h, etc.

In some embodiments, T1-200°C ≤ T2 ≤ T1, and T2 ≥ 800°C. Preferably, 850 +(T1 -900)/4°C ≤ T2 ≤ T1 -(T1 - 900)/4°C. For example, T2 may be 820°C, 850°C, 880°C, 910°C, 960°C, 1000°C, etc. The sintering time is 0.5-20 h. Specifically, the lithium-manganese-nickel composite oxide intermediate may be heated to T2, and held at the temperature of T2 for 0.5-20 h, for example, 2 h, 5 h, 8 h, 12 h, 15 h, 18 h, etc.

In some embodiments, 500°C ≤ T3 ≤ 800°C, and preferably 600°C ≤ T3 ≤ 700°C. For example, T3 may be 520°C, 560°C, 630°C, 680°C, 710°C, 750°C, etc. The annealing time may be 5-30 h. Specifically, the lithium-manganese-nickel composite oxide preform may be heated to T3, and held at the temperature of T3 for 5-30 h, for example, 8 h, 14 h, 18 h, 23 h, 27 h, etc.

The appropriate temperature of T1 and duration at this temperature are important parameters to ensure the grain size, the oxygen defect content, and the element distribution, etc. The appropriate temperature of T2 and duration at this temperature have important influences on the roundness and oxygen defect content of crystal grains, and the R value. The annealing is beneficial to reduce the R value and the oxygen defects and to improve the stability of the material. In this embodiment, by reasonably adjusting the ranges of the temperatures of T1, T2 and T3, and the reaction times of steps S110, S120 and S130, the volume median particle size of the obtained material can be adjusted to 2 µm ≤ D_{V50} ≤ 20 µm, and the obtained material can have a lower oxygen vacancy defect, a higher E value, and a lower R value. The specific performance parameters of the material have been described in detail in the above embodiments, and will not be described again here.

In some embodiments, steps S120 and S130 are optional, and there may be only one or neither of them. S120 needs to be carried out after cooling to a lower temperature after S110. S130 may be carried out following the previous cooling heat treatment step, or in direct combination therewith.

In some embodiments, the oxygen-containing atmosphere may be air, oxygen, an air-oxygen mixture, etc.

The present application further provides a positive electrode plate, comprising a positive electrode material and a positive electrode current collector. The positive electrode material is the lithium-manganese-nickel composite oxide of any one of the above embodiments.

In some embodiments, the positive electrode material further comprises a positive electrode conductive material, thereby imparting conductivity to the electrode. The positive electrode conductive material may include any conductive material as long as it does not cause a chemical change. Non-limiting examples of the positive electrode conductive material include carbon-based materials (e.g., natural graphite, artificial graphite, carbon black, acetylene black, Ketjen black, carbon fibers, etc.), metal-based materials (e.g., metal powder, metal fibers, etc., including, for example, copper, nickel, aluminum, silver, etc.), conductive polymers (e.g., polyphenylene derivatives), and mixtures thereof. In some embodiments, the positive electrode current collector may be aluminum (Al).

The present application further provides an electrochemical device. The electrochemical device includes any device that undergoes an electrochemical reaction, and its specific examples include all types of primary batteries or secondary batteries. The lithium secondary batteries may include lithium metal secondary batteries, lithium ion secondary batteries, lithium polymer secondary batteries, or lithium ion polymer secondary batteries.

In some embodiments, the battery comprises a positive electrode plate, a separator, and a negative electrode plate. The separator is located between the positive electrode plate and the negative electrode plate for isolation, and the positive electrode plate includes the positive electrode plate according to any one of the above embodiments.

In some embodiments, the negative electrode comprises a current collector and a negative electrode active material layer arranged on the current collector. The specific type of the negative electrode active material is not particularly limited and can be selected according to requirements. For example, the negative electrode active material is selected from one or more of natural graphite, artificial graphite, mesocarbon microbeads (abbreviated as MCMB), hard carbon, soft carbon, silicon, silicon-carbon composites, Li-Sn alloys, Li-Sn-O alloys, Sn, SnO, SnO2, spinel-structure lithiated TiO₂-Li₄Ti₅O₁₂, and Li-Al alloys.

In some embodiments, the electrolyte solution comprises a solvent including one or more of fluorocarbonates, fluorocarboxylates, sulfones, and fluoroethers. optionally, one or more of fluorocarbonates, fluorocarboxylates, and sulfones. The selected electrolyte solution is a high-voltage-resistant electrolyte solution having a weaker acidity under a high voltage, which can obviously reduce side reactions on the surface and improve the stability of the battery.

In some embodiments, the use of the electrochemical device of the present application is not particularly limited, and the electrochemical device of the present application can be used in any electronic device known in the prior art. That is, a power consuming device is provided. In some embodiments, the electrochemical device of the present application may be used in, but not limited to, a notebook computer, a pen input computer, a mobile computer, an e-book player, a portable telephone, a portable fax machine, a portable copier, a portable printer, stereo headphones, a video recorder, a liquid crystal display television, a portable cleaner, a portable CD player, a mini disk, a transceiver, an electronic notebook, a calculator, a memory card, a portable recorder, a radio, a backup power supply, a motor, an automobile, a motorcycle, an electric bike, a bike, a lighting fixture, a toy, a game machine, a clock, an electric tool, a flash lamp, a camera, a large household storage battery, a lithium ion capacitor, etc.

Hereinafter, the preparation of the lithium ion battery will be described by taking the lithium ion battery as an example and in conjunction with specific examples. Those skilled in the art will understand that the preparation method described in the present application is only an example, and any other suitable preparation methods are within the scope of the present application.

### 1. Preparation of positive electrode

### Preparation of positive electrode active material

Raw material powders in a corresponding stoichiometric ratio were weighed according to a target composition of the positive electrode active material, and uniformly mixed to obtain a raw material mixture powder. The raw material mixture powder was heated to T1 under an air atmosphere, held the temperature for a time of t1, and cooled to room temperature to obtain a semi-finished product. The semi-finished product was heated to T2 under the air atmosphere, held the temperature for a time of t2, and cooled to room temperature to obtain a preform. The preform was heated to T3 under the air atmosphere, held the temperature for a time of t3, and cooled to room temperature to obtain a lithium-nickel-manganese composite oxide. The specific target composition, raw material used, and parameters of the preparation process are shown in Tables 1 and 2.

### 2. Assembly of battery (button battery)

The positive electrode material was assembled into a button battery using a lithium plate as a counter electrode. Specifically, the lithium-nickel-manganese composite oxide, conductive carbon black (Super P), and PVDF were mixed according to a weight ratio of 90 : 5 : 5, an appropriate amount of solvent N-methylpyrrolidone (NMP) was added, and stirred uniformly to obtain a positive electrode slurry. The positive electrode slurry was coated on an aluminum foil, and then dried to obtain a positive electrode plate. The loading amount of the lithium-nickel-manganese composite oxide on the positive electrode plate was 0.016 g/cm². An electrolyte solution was provided. A polypropylene film (Φ 16 mm) with a thickness of 12 µm was used as a separator, and a lithium plate, the separator and the positive electrode plate were placed in order, so that the separator was located between the metal lithium plate and the positive electrode plate for isolation. The electrolyte solution was injected and assembled into a CR2030 button battery, which was allowed to stand for 4 h to obtain the button battery.

The electrolyte solution used in Comparative Examples 1-8 and Examples 1-61 was a mixed solution of a carbonate and a fluorocarbonate containing 1 mol/L LiPF₆. The ratio of the carbonate to the fluorocarbonate was 1 : 1.

The electrolyte solution used in Comparative Examples 9 and 10 included only a carbonate.

### 3. Manufacture of pouch battery

The positive electrode active material was assembled into a pouch battery. Specifically, the lithium-nickel-manganese composite oxide, conductive carbon black (Super P), and PVDF were mixed according to a weight ratio of 96 : 2.5 : 1.5, an appropriate amount of solvent N-methylpyrrolidone (NMP) was added, and stirred uniformly to obtain a positive electrode slurry. The positive electrode slurry was coated on an aluminum foil, and then dried to obtain a positive electrode plate. The loading amount of the lithium-nickel-manganese composite oxide on the positive electrode plate was 0.016 g/cm². A negative electrode active material of artificial graphite, a conductive agent of carbon black (Super P), a binder of styrene-butadiene rubber, and a thickener of sodium carboxymethyl cellulose were fully stirred and mixed according to a mass ratio of 96 : 1 : 1 : 2 in an appropriate amount of solvent of deionized water to form an uniform negative electrode slurry. the negative electrode slurry was uniformly coated onto the surface of a negative electrode current collector of copper foil, followed by drying and cold pressing, to obtain the negative electrode plate. The loading amount of the negative electrode active material on one side of the negative electrode current collector was 0.007 g/cm². A mixed solution of a carbonate, a fluorocarbonate and the like containing 1 mol/L LiPF₆ was provided as an electrolyte solution. A polypropylene film with a thickness of 12 µm was used as a separator, and the positive electrode plate, the separator, and the negative electrode plate obtained above were placed in order, so that the separator was located between the positive electrode plate and the negative electrode plate for isolation, which was then processed and molded, and packed with an aluminum-plastic bag. The electrolyte solution was injected and packaged for forming capacity, so as to prepare a pouch cell.

The electrolyte solution used in Comparative Examples 1-8 and Examples 1-61 was a mixed solution of a carbonate and a fluorocarbonate containing 1 mol/L LiPF₆. The ratio of the carbonate to the fluorocarbonate was 1 : 1.

The electrolyte solution used in Comparative Examples 9 and 10 included only a carbonate.

4. The process for testing relevant parameters of the positive electrode active materials in examples and comparative examples of the present application was as follows:

### (1) XRD test

With reference to the general principles of X-ray diffraction analysis of JIS K 0131-1996, the X-ray diffraction pattern of the spinel-type nickel-manganese-lithium-containing composite oxide material was determined by using CuKα1 ray.

### (2) Element content test

With reference to inductively coupled plasma atomic emission spectrometry of EPA 6010D-2014 , the contents of the elements in the spinel-type nickel-manganese-lithium-containing composite oxide material were measured.

### (3) Morphology test

The positive electrode active materials of all examples and comparative examples were tested by a ZEISS sigma 300 scanning electron microscope, and then tested with reference to the standard JY/T010-1996. The morphology of the samples was observed.

### (4) Particle size test

With reference to laser particle size analyzer diffraction of GB/T19077-2016, an appropriate amount of sample to be tested was added to a clean beaker, a surfactant was added dropwise, followed by the addition of a dispersant, after sufficient dispersion, the particle size distribution characteristics of the particles were determined by a laser particle size analyzer (opacity: 8%-12%).

### (5) Specific surface area test

According to gas adsorption BET method of GB/T 19587-2004, after the sample was heated and degassed, then was measured at a constant low-temperature to obtain the adsorption amount of gas on a solid surface under different adsorption pressures, and then the monomolecular layer adsorption amount of the sample was calculated on the basis of the BET multilayer adsorption theory and the formula thereof so as to calculate the specific surface area of the solid sample per unit mass.

### 5. Button battery test and calculation of 4 V platform R value of charge

At 25°C, the button battery prepared from the positive electrode active material of each example/comparative example was charged to a voltage of 4.95 V at a constant current of 0.1 C. The charge capacity within 3.5-4.4 V (C1) and the charge capacity within 3.5-4.95 V (C2) were intercepted from the original charge data.

### 4 V platform ratio R of charge capacity=C1/C2.

### 6. Electrical performance test of pouch battery and calculation of overall electrical performance coefficient K

### (1) Test of initial discharge energy density of positive electrode active material in pouch battery

The prepared pouch battery was used as the test object.

At 25°C, the pouch battery was charged to a voltage of 4.8 V at a constant current of 0.3 C, then charged to a current of 0.05 C at a constant voltage of 4.8 V, allowed to stand for 5 min, and discharged to a voltage of 3.5 V at a constant current of 0.33 C. The discharge energy was the battery discharge energy. The energy was divided by the mass of the positive electrode active substance in the battery to obtain the initial discharge energy density of the positive electrode active substance.

### (2) High-temperature cycling performance test of pouch battery

The prepared pouch battery was used as the test object.

At 45°C, the pouch battery was charged to a voltage of 4.8 V at a constant current of 0.5 C, and then charged to a current of 0.05 C at a constant voltage of 4.8 V, allowed to stand for 5 min, and discharged to a voltage of 3.5 V at a constant current of 0.5 C, which was one charge cycling process. This discharge capacity was the discharge capacity of the initial cycling. The pouch battery was subjected to the cycling charge test according to the above method until the discharge capacity decayed to 80% of the initial value, thereby completing the cycling. The total number of cycles was the high-temperature cycling life.

### (3) High-temperature full-charge storage performance test of pouch battery

The prepared pouch battery was used as the test object.

At 25°C, the pouch battery was charged to a voltage of 4.8 V at a constant current of 0.3 C, and then charged to a current of 0.05 C at a constant voltage of 4.8 V. Then, the battery was placed at 45°C, and fully discharged every 10 d. Next, at 25°C, the battery was fully charged and fully discharged once, and the discharge capacity Cn was recorded. The battery was fully charged again, and then stored in a 45°C environment, until the discharge capacity Cn decayed to 80% of the initial value, thereby completing the storage. The total storage time at 45°C after full charge was the high-temperature full-charge storage time.

### (4) Calculation of overall electrical performance coefficient K

In order to comprehensively evaluate various electrical performances, the overall electrical performance coefficient K =(initial discharge energy density - 500)*(high-temperature cycling life/200 + high-temperature storage life/100) is used in the present invention. The larger the K value, the better the overall performance. The calculation logic of the K value is: total mileage = endurance (energy density)*life (combination of cycling and storage). Constants 500, 200, and 100 are determined after considering the basic energy density, cycling life, and storage life that should be met when the spinel LiNi_{0.5}Mn_{1.5}O₄ is used in a battery using a graphite negative electrode.

**Table 1: Parameters of preparation processes of examples and comparative examples**

| Sample No. | Raw material compositions | T1/°C | t1/h | T2/°C | t2/h | T3/°C | t3/h |
|---|---|---|---|---|---|---|---|
| Comparative Example 1 | Li₂CO₃, Ni_{0.5}Mn_{1.5}(OH)₄ | 950 | 20 | // | // | 650 | 20 |
| Comparative Example 2 | Li₂CO₃, Ni_{0.5}Mn_{1.5}(OH)₄ | 950 | 20 | // | // | // | // |
| Example 1 | Li₂CO₃, Ni_{0.5}Mn_{1.5}(OH)₄ | 950 | 20 | // | // | // | // |
| Example 2 | Li₂CO₃, Ni_{0.5}Mn_{1.5}(OH)₄ | 950 | 20 | // | // | 650 | 20 |
| Example 3 | Li₂CO₃, Ni_{0.49}Mn_{1.47}(OH)_{3.92}, NH₄H₂PO₄ | 950 | 20 | // | // | // | // |
| Example 4 | Li₂CO₃, Ni_{0.49}Mn_{1.47}(OH)_{3.92}, NH₄H₂PO₄, TeO₂ | 950 | 20 | // | // | // | // |
| Example 5 | Li₂CO₃, Ni_{0.49}Mn_{1.47}(OH)_{3.92}, SiO₂ | 950 | 20 | // | // | // | // |
| Example 6 | Li₂CO₃, Ni_{0.5}Mn_{1.49}(OH)_{3.98}, RuO₂ | 950 | 20 | // | // | // | // |
| Example 7 | Li₂CO₃, Ni_{0.49}Mn_{1.47}(OH)_{3.92}, CeO₂ | 950 | 20 | // | // | // | // |
| Example 8 | Li₂CO₃, Ni_{0.49}Mn_{1.47}(OH)_{3.92}, NH₄H₂PO₄, CeO₂ | 950 | 20 | // | // | // | // |
| Example 9 | Li₂CO₃, Ni_{0.49}Mn_{1.47}(OH)_{3.92}, NH₄H₂PO₄, Nb₂O₅ | 950 | 20 | // | // | // | // |
| Example 10 | Li₂CO₃, Ni_{0.49}Mn_{1.47}(OH)_{3.92}, NH₄H₂PO₄, Ta₂O₅ | 950 | 20 | // | // | // | // |
| Example 11 | Li₂CO₃, Ni_{0.49}Mn_{1.47}(OH)_{3.92}, NH₄H₂PO₄, WO₃ | 950 | 20 | // | // | // | // |
| Example 12 | Li₂CO₃, Ni_{0.49}Mn_{1.47}(OH)_{3.92}, TeO₂, CeO₂ | 950 | 20 | // | // | // | // |
| Example 13 | Li₂CO₃, Ni_{0.49}Mn_{1.47}(OH)_{3.92}, Te₂O₅, Ta₂O₅ | 950 | 20 | // | // | // | // |
| Example 14 | Li₂CO₃, Ni_{0.49}Mn_{1.47}(OH)_{3.92}, Li₂SO₄, | 950 | 20 | // | // | // | // |
| Comparative Example 3 | Li₂CO₃, Ni_{0.49}Mn_{1.5}(OH)_{3.98}, Cr₂O₃ | 950 | 20 | // | // | // | // |
| Example 14 | Li₂CO₃, Ni_{0.48}Mn_{1.47}(OH)_{3.9}, NH₄H₂PO₄, Cr₂O₃ | 950 | 20 | // | // | // | // |
| Example 15 | Li₂CO₃, Ni_{0.48}Mn_{1.46}(OH)_{3.88}, NH₄H₂PO₄, TeO₂, Al₂O₃ | 950 | 20 | // | // | // | // |
| Example 16 | Li₂CO₃, Ni_{0.48}Mn_{1.47}(OH)_{3.9}, NH₄H₂PO₄, TeO₂, Sb₂O₅ | 950 | 20 | // | // | // | // |
| Comparative Example 4 | Li₂CO₃, Ni_{0.5}Mn_{1.5}(OH)₄, LiF | 950 | 20 | // | // | // | // |
| Example 17 | Li₂CO₃, Ni_{0.49}Mn_{1.47}(OH)_{3.92}, | 950 | 20 | // | // | // | // |
| | NH₄H₂PO₄, LiF | | | | | | |
| Example 18 | Li₂CO₃, Ni_{0.49}Mn_{1.47}(OH)_{3.92}, NH₄H₂PO₄, LiI | 950 | 20 | // | // | // | // |
| Example 19 | Li₂CO₃, Ni_{0.49}Mn_{1.47}(OH)_{3.92}, NH₄H₂PO₄, TeO₂, LiF | 950 | 20 | // | // | // | // |
| Example 20 | Li₂CO₃, Ni_{0.49}Mn_{1.47}(OH)_{3.92}, NH₄H₂PO₄, CeO₂, LiF | 950 | 20 | // | // | // | // |
| Comparative Example 5 | Li₂CO₃, Ni_{0.5}Mn_{1.48}(OH)_{3.96}, Al₂O₃, LiF | 950 | 20 | // | // | // | // |
| Example 21 | Li₂CO₃, Ni_{0.48}Mn_{1.47}(OH)_{3.9}, NH₄H₂PO₄, Al₂O₃, LiF | 950 | 20 | // | // | // | // |
| Example 22 | Li₂CO₃, Ni_{0.48}Mn_{1.46}(OH)_{3.88}, NH₄H₂PO₄ | 950 | 20 | // | // | // | // |
| Example 23 | Li₂CO₃, Ni_{0.49}Mn_{1.46}(OH)_{3.9}, NH₄H₂PO₄ | 950 | 20 | // | // | // | // |
| Example 24 | Li₂CO₃, Ni_{0.49}Mn_{1.48}(OH)_{3.94}, NH₄H₂PO₄ | 950 | 20 | // | // | // | // |
| Example 25 | Li₂CO₃, Ni_{0.5}Mn_{1.49}(OH)_{3.98}, NH₄H₂PO₄ | 950 | 20 | // | // | // | // |
| Example 26 | Li₂CO₃, Ni_{0.5}Mn_{1.495}(OH)_{3.99}, NH₄H₂PO₄ | 950 | 20 | // | // | // | // |
| Example 27 | Li₂CO₃, Ni_{0.5}Mn_{1.497}(OH)_{3.994}, NH₄H₂PO₄ | 950 | 20 | // | // | // | // |
| Example 28 | Li₂CO₃, Ni_{0.5}Mn_{1.49}(OH)_{3.98}, NH₄H₂PO₄ | 950 | 20 | // | // | // | // |
| Example 29 | Li₂CO₃, Ni_{0.49}Mn_{1.48}(OH)_{3.94}, NH₄H₂PO₄ | 950 | 20 | // | // | // | // |
| Example 30 | Li₂CO₃, Ni_{0.49}Mn_{1.47}(OH)_{3.92}, NH₄H₂PO₄ | 950 | 20 | // | // | // | // |
| Example 31 | Li₂CO₃, Ni_{0.49}Mn_{1.47}(OH)_{3.92}, NH₄H₂PO₄ | 950 | 20 | // | // | // | // |
| Example 32 | Li₂CO₃, Ni_{0.49}Mn_{1.47}(OH)_{3.92}, NH₄H₂PO₄ | 950 | 20 | // | // | // | // |
| Comparative Example 6 | Li₂CO₃, Ni_{0.49}Mn_{1.47}(OH)_{3.92}, NH₄H₂PO₄ | 950 | 20 | // | // | // | // |
| Example 33 | Li₂CO₃, Ni_{0.5}Mn_{1.498}(OH)_{3.996}, NH₄H₂PO₄ | 950 | 20 | // | // | // | // |
| Example 34 | Li₂CO₃, Ni_{0.5}Mn_{1.49}(OH)_{3.98}, NH₄H₂PO₄ | 950 | 20 | // | // | // | // |
| Example 35 | Li₂CO₃, Ni_{0.48}Mn_{1.46}(OH)_{3.88}, NH₄H₂PO₄ | 950 | 20 | // | // | // | // |
| Example 36 | Li₂CO₃, Ni_{0.47}Mn_{1.43}(OH)_{3.8}, NH₄H₂PO₄ | 950 | 20 | // | // | // | // |
| Example 37 | Li₂CO₃, Ni_{0.45}Mn_{1.35}(OH)_{3.6}, NH₄H₂PO₄ | 950 | 20 | // | // | // | // |
| Comparative | Li₂CO₃, Ni_{0.44}Mn_{1.32}(OH)_{3.52}, | 950 | 20 | // | // | // | // |
| Example 7 | NH₄H₂PO₄ | | | | | | |
| Comparative Example 8 | Li₂CO₃, Ni_{0.49}Mn_{1.47}(OH)_{3.92}, NH₄H₂PO₄ | 800 | 20 | // | // | // | // |
| Example 38 | Li₂CO₃, Ni_{0.49}Mn_{1.47}(OH)_{3.92}, NH₄H₂PO₄ | 850 | 20 | // | // | // | // |
| Example 39 | Li₂CO₃, Ni_{0.49}Mn_{1.47}(OH)_{3.92}, NH₄H₂PO₄ | 900 | 20 | // | // | // | // |
| Example 40 | Li₂CO₃, Ni_{0.49}Mn_{1.47}(OH)_{3.92}, NH₄H₂PO₄ | 1000 | 20 | // | // | // | // |
| Example 41 | Li₂CO₃, Ni_{0.49}Mn_{1.47}(OH)_{3.92}, NH₄H₂PO₄ | 1100 | 20 | // | // | // | // |
| Example 42 | Li₂CO₃, Ni_{0.49}Mn_{1.47}(OH)_{3.92}, NH₄H₂PO₄ | 1200 | 20 | // | // | // | // |
| Example 43 | Li₂CO₃, Ni_{0.49}Mn_{1.47}(OH)_{3.92}, NH₄H₂PO₄ | 950 | 2 | // | // | // | // |
| Example 44 | Li₂CO₃, Ni_{0.49}Mn_{1.47}(OH)_{3.92}, NH₄H₂PO₄ | 950 | 50 | // | // | // | // |
| Example 45 | Li₂CO₃, Ni_{0.49}Mn_{1.47}(OH)_{3.92}, NH₄H₂PO₄ | 950 | 20 | 800 | 5 | // | // |
| Example 46 | Li₂CO₃, Ni_{0.49}Mn_{1.47}(OH)_{3.92}, NH₄H₂PO₄ | 950 | 20 | 865 | 2 | // | // |
| Example 47 | Li₂CO₃, Ni_{0.49}Mn_{1.47}(OH)_{3.92}, NH₄H₂PO₄ | 950 | 20 | 935 | 1 | // | // |
| Example 48 | Li₂CO₃, Ni_{0.49}Mn_{1.47}(OH)_{3.92}, NH₄H₂PO₄ | 950 | 20 | 950 | 0.5 | // | // |
| Example 49 | Li₂CO₃, Ni_{0.49}Mn_{1.47}(OH)_{3.92}, NH₄H₂PO₄ | 950 | 20 | 865 | 0.5 | // | // |
| Example 50 | Li₂CO₃, Ni_{0.49}Mn_{1.47}(OH)_{3.92}, NH₄H₂PO₄ | 950 | 20 | 865 | 8 | // | // |
| Example 51 | Li₂CO₃, Ni_{0.49}Mn_{1.47}(OH)_{3.92}, NH₄H₂PO₄ | 950 | 20 | 865 | 20 | // | // |
| Example 52 | Li₂CO₃, Ni_{0.49}Mn_{1.47}(OH)_{3.92}, NH₄H₂PO₄ | 950 | 20 | // | // | 500 | 30 |
| Example 53 | Li₂CO₃, Ni_{0.49}Mn_{1.47}(OH)_{3.92}, NH₄H₂PO₄ | 950 | 20 | // | // | 600 | 25 |
| Example 54 | Li₂CO₃, Ni_{0.49}Mn_{1.47}(OH)_{3.92}, NH₄H₂PO₄ | 950 | 20 | // | // | 700 | 15 |
| Example 55 | Li₂CO₃, Ni_{0.49}Mn_{1.47}(OH)_{3.92}, NH₄H₂PO₄ | 950 | 20 | // | // | 780 | 10 |
| Example 56 | Li₂CO₃, Ni_{0.49}Mn_{1.47}(OH)_{3.92}, NH₄H₂PO₄ | 950 | 20 | // | // | 650 | 5 |
| Example 57 | Li₂CO₃, Ni_{0.49}Mn_{1.47}(OH)_{3.92}, NH₄H₂PO₄ | 950 | 20 | // | // | 650 | 30 |
| Example 58 | Li₂CO₃, Ni_{0.49}Mn_{1.47}(OH)_{3.92}, NH₄H₂PO₄ | 950 | 20 | 865 | 2 | 650 | 10 |
| Example 59 | Li₂CO₃, Ni_{0.49}Mn_{1.47}(OH)_{3.92}, NH₄H₂PO₄, CeO₂, LiF | 950 | 20 | 900 | 1 | 700 | 10 |
| Example 60 | Li₂CO₃, Ni_{0.48}Mn_{1.47}(OH)_{3.9}, NH₄H₂PO₄, Cr₂O₃, LiI | 950 | 20 | 900 | 1 | 670 | 15 |
| Example 61 | Li₂CO₃, Ni_{0.48}Mn_{1.47}(OH)_{3.9}, NaOH, SiO₂, TiO₂, LiF | 950 | 20 | 900 | 1 | 640 | 20 |
| Comparative Example 9 | Li₂CO₃, Ni_{0.5}Mn_{1.5}(OH)₄ | 950 | 20 | // | // | 650 | 20 |
| Comparative Example 10 | Li₂CO₃, Ni_{0.49}Mn_{1.47}(OH)_{3.92}, NH₄H₂PO₄ | 950 | 20 | // | // | // | // |

**Table 2: Compositions and performance parameters of positive electrode materials of examples and comparative examples**

| Sample No. | Compositions of positive electrode active material | a | x | E valu e | R value/ % | I_{(21.5°-24°)}/I₁₁₁( %) | Dv50/µ m | Specific surface area BET/(m2/ g) |
|---|---|---|---|---|---|---|---|---|
| Comparati ve Example 1 | Li_{1.0}Ni_{0.5}Mn_{1.5}O₄ | 0.00 | 0.00 | 2.05 | 2.3 | 0.52 | 6.2 | 0.535 |
| Comparati ve Example 2 | Li_{1.07}Ni_{0.5}Mn_{1.5}O₄ | 0.07 | 0.00 | 1.97 | 7.6 | 0.47 | 6.5 | 0.498 |
| Example 1 | Li_{1.0}Ni_{0.5}Mn_{1.5}O₄ | 0.00 | 0.00 | 2.42 | 14.7 | 0.00 | 6.4 | 0.543 |
| Example 2 | Li_{0.97}Ni_{0.5}Mn_{1.5}O₄ | 0.03 | 0.00 | 2.23 | 5.8 | 0.00 | 6.8 | 0.467 |
| Example 3 | Li_{1.07}P_{0.04}Ni_{0.49}Mn_{1.47}O₄ | 0.07 | 0.04 | 2.72 | 8.6 | 1.25 | 6.1 | 0.566 |
| Example 4 | Li_{1.07}P_{0.03}Te_{0.01}Ni_{0.49}Mn_{1.47}O₄ | 0.07 | 0.04 | 2.64 | 9.1 | 1.14 | 6.0 | 0.582 |
| Example 5 | Li_{1.07}Si_{0.04}Ni_{0.49}Mn_{1.47}O₄ | 0.07 | 0.04 | 2.49 | 8.3 | 0.98 | 6.8 | 0.453 |
| Example 6 | Li_{1.07}Ru_{0.01}Ni_{0.5}Mn_{1.49}O₄ | 0.07 | 0.01 | 2.41 | 7.9 | 0.23 | 6.5 | 0.499 |
| Example 7 | Li_{1.07}Ce_{0.04}Ni_{0.49}Mn_{1.47}O₄ | 0.07 | 0.04 | 2.43 | 7.1 | 0.72 | 6.3 | 0.522 |
| Example 8 | Li_{1.07}P_{0.03}Ce_{0.01}Ni_{0.49}Mn_{1.47}O₄ | 0.07 | 0.04 | 2.68 | 8.3 | 1.08 | 6.2 | 0.544 |
| Example 9 | Li_{1.07}P_{0.03}Nb_{0.01}Ni_{0.49}Mn_{1.47}O₄ | 0.07 | 0.04 | 2.56 | 8.2 | 1.02 | 5.9 | 0.601 |
| Example 10 | Li_{1.07}P_{0.03}Ta_{0.01}Ni_{0.49}Mn_{1.47}O₄ | 0.07 | 0.04 | 2.59 | 8.4 | 0.97 | 5.8 | 0.625 |
| Example 11 | Li_{1.07}P_{0.03}W_{0.01}Ni_{0.49}Mn_{1.47}O₄ | 0.07 | 0.04 | 2.51 | 8.0 | 1.03 | 5.8 | 0.623 |
| Example 12 | Li_{1.07}Te_{0.02}Ce_{0.02}Ni_{0.49}Mn_{1.47}O₄ | 0.07 | 0.04 | 2.25 | 7.4 | 0.51 | 5.6 | 0.669 |
| Example 13 | Li_{1.07}Nb_{0.02}Ta_{0.02}Ni_{0.49}Mn_{1.47}O₄ | 0.07 | 0.04 | 2.19 | 7.2 | 0.60 | 5.5 | 0.697 |
| Example 14 | Li_{1.07}S_{0.03}W_{0.01}Ni_{0.49}Mn_{1.47}O₄ | 0.07 | 0.04 | 2.17 | 8.1 | 0.68 | 5.9 | 0.621 |
| Comparati ve | Li_{1.07}Ni_{0.49}Mn_{1.5}Cr_{0.01}O₄ | 0.07 | 0.00 | 1.92 | 6.4 | 0.00 | 5.4 | 0.732 |
| Example 3 | | | | | | | | |
| Example 14 | Li_{1.07}P_{0.04}Ni_{0.48}Mn_{1.47}Cr_{0.01}O₄ | 0.07 | 0.04 | 2.31 | 8.2 | 0.73 | 5.8 | 0.622 |
| Example 15 | Li_{1.07}P_{0.03}Te_{0.01}Ni_{0.48}Mn_{1.46}Al_{0.02} O₄ | 0.07 | 0.04 | 2.39 | 8.8 | 0.95 | 5.9 | 0.604 |
| Example 16 | Li_{1.07}P_{0.03}Te_{0.01}Ni_{0.48}Mn_{1.47}Sb_{0.01} O₄ | 0.07 | 0.04 | 2.42 | 9.2 | 1.01 | 5.8 | 0.619 |
| Comparati ve Example 4 | Li_{1.07}Ni_{0.5}Mn_{1.5}O_{3.8}F_{0.2} | 0.07 | 0.00 | 1.93 | 4.9 | 0.15 | 5.5 | 0.693 |
| Example 17 | Li_{1.07}P_{0.04}Ni_{0.49}Mn_{1.47}O_{3.8}F_{0.2} | 0.07 | 0.04 | 2.41 | 6.1 | 0.99 | 5.9 | 0.608 |
| Example 18 | Li_{1.07}P_{0.04}Ni_{0.49}Mn_{1.47}O_{3.9}I_{0.1} | 0.07 | 0.04 | 2.47 | 6.5 | 1.08 | 6.0 | 0.593 |
| Example 19 | Li_{1.07}P_{0.03}Te_{0.01}Ni_{0.49}Mn_{1.47}O_{3.8}F_{0. 2} | 0.07 | 0.04 | 2.43 | 5.8 | 1.14 | 5.9 | 0.599 |
| Example 20 | Li_{1.07}P_{0.03}Ce_{0.01}Ni_{0.49}Mn_{1.47}O_{3.8}F_{0. 2} | 0.07 | 0.04 | 2.52 | 5.2 | 1.12 | 5.8 | 0.627 |
| Comparati ve Example 5 | Li_{1.07}Ni_{0.5}Mn_{1.48}Al_{0.02}O_{3.8}F_{0.2} | 0.07 | 0.00 | 2.01 | 4.7 | 0.10 | 5.4 | 0.711 |
| Example 21 | Li_{1.07}P_{0.04}Ni_{0.48}Mn_{1.47}Al_{0.02}O_{3.8}F₀. ₂ | 0.07 | 0.04 | 2.34 | 6.0 | 1.04 | 5.9 | 0.599 |
| Example 22 | Li_{1.03}P_{0.06}Ni_{0.48}Mn_{1.46}O₄ | 0.03 | 0.06 | 3.08 | 9.8 | 0.46 | 5.3 | 0.735 |
| Example 23 | Li_{1.05}P_{0.05}Ni_{0.49}Mn_{1.46}O₄ | 0.05 | 0.05 | 2.99 | 9.4 | 1.39 | 5.2 | 0.777 |
| Example 24 | Li_{1.06}P_{0.03}Ni_{0.49}Mn_{1.48}O₄ | 0.06 | 0.03 | 2.65 | 8.3 | 0.88 | 6.0 | 0.581 |
| Example 25 | Li_{1.1}P_{0.01}Ni_{0.5}Mn_{1.49}O₄ | 0.10 | 0.01 | 2.43 | 7.7 | 0.32 | 6.5 | 0.496 |
| Example 26 | Li_{1.1}P_{0.005}Ni_{0.5}Mn_{1.495}O₄ | 0.10 | 0.00 5 | 2.33 | 7.3 | 0.18 | 6.6 | 0.477 |
| Example 27 | Li_{1.09}P_{0.003}Ni_{0.5}Mn_{1.497}O₄ | 0.09 | 0.00 3 | 2.13 | 7.3 | 0.11 | 6.8 | 0.461 |
| Example 28 | Li_{1.01}P_{0.01}Ni_{0.5}Mn_{1.49}O₄ | 0.01 | 0.01 | 3.13 | 12.3 | 0.25 | 5.9 | 0.608 |
| Example 29 | Li_{1.03}P_{0.03}Ni_{0.49}Mn_{1.48}O₄ | 0.03 | 0.04 | 2.96 | 12.0 | 1.07 | 6.1 | 0.572 |
| Example 30 | Li_{1.12}P_{0.04}Ni_{0.49}Mn_{1.47}O₄ | 0.12 | 0.04 | 2.46 | 9.4 | 0.98 | 7.1 | 0.430 |
| Example 31 | Li_{1.15}P_{0.04}Ni_{0.49}Mn_{1.47}O₄ | 0.15 | 0.04 | 2.37 | 6.3 | 0.53 | 7.5 | 0.396 |
| Example 32 | Li_{1.3}P_{0.04}Ni_{0.49}Mn_{1.47}O₄ | 0.30 | 0.04 | 2.16 | 4.2 | 0.18 | 8.2 | 0.298 |
| Comparati ve Example 6 | Li_{1.35}P_{0.04}Ni_{0.49}Mn_{1.47}O₄ | 0.35 | 0.04 | 1.85 | 3.5 | 0.13 | 9.1 | 0.235 |
| Example 33 | Li_{1.002}P_{0.002}Ni_{0.5}Mn_{1.498}O₄ | 0.00 2 | 0.00 2 | 2.74 | 14.8 | 0.09 | 6.3 | 0.501 |
| Example 34 | Li_{1.01}P_{0.01}Ni_{0.5}Mn_{1.49}O₄ | 0.01 | 0.01 | 2.75 | 13.5 | 0.32 | 6.2 | 0.544 |
| Example 35 | Li_{1.06}P_{0.06}Ni_{0.48}Mn_{1.46}O₄ | 0.06 | 0.06 | 2.82 | 9.4 | 1.54 | 6.0 | 0.583 |
| Example 36 | Li_{1.1}P_{0.1}Ni_{0.47}Mn_{1.43}O₄ | 0.10 | 0.10 | 3.05 | 7.9 | 1.98 | 5.9 | 0.605 |
| Example 37 | Li_{1.2}P_{0.2}Ni_{0.45}Mn_{1.35}O₄ | 0.20 | 0.20 | 3.30 | 11.3 | 3.01 | 5.7 | 0.648 |
| Comparati ve Example 7 | Li_{1.24}P_{0.24}Ni_{0.44}Mn_{1.32}O₄ | 0.24 | 0.24 | 3.57 | 15.9 | 4.22 | 5.5 | 0.696 |
| Comparati ve Example 8 | Li_{1.07}P_{0.04}Ni_{0.49}Mn_{1.47}O₄ | 0.07 | 0.04 | 1.98 | 3.2 | 1.84 | 1.7 | 2.365 |
| Example 38 | Li_{1.07}P_{0.04}Ni_{0.49}Mn_{1.47}O₄ | 0.07 | 0.04 | 2.24 | 4.1 | 1.56 | 2.1 | 1.942 |
| Example 39 | Li_{1.07}P_{0.04}Ni_{0.49}Mn_{1.47}O₄ | 0.07 | 0.04 | 2.37 | 6.2 | 1.4 | 3.8 | 1.068 |
| Example 40 | Li_{1.07}P_{0.04}Ni_{0.49}Mn_{1.47}O₄ | 0.07 | 0.04 | 2.80 | 9.9 | 1.17 | 11.2 | 0.166 |
| Example 41 | Li_{1.07}P_{0.04}Ni_{0.49}Mn_{1.47}O₄ | 0.07 | 0.04 | 2.97 | 11.5 | 1.02 | 19.6 | 0.103 |
| Example 42 | Li_{1.07}P_{0.04}Ni_{0.49}Mn_{1.47}O₄ | 0.07 | 0.04 | 3.25 | 13.4 | 0.69 | 31.2 | 0.058 |
| Example 43 | Li_{1.07}P_{0.04}Ni_{0.49}Mn_{1.47}O₄ | 0.07 | 0.04 | 2.58 | 6.4 | 1.39 | 5.3 | 0.731 |
| Example 44 | Li_{1.07}P_{0.04}Ni_{0.49}Mn_{1.47}O₄ | 0.07 | 0.04 | 2.81 | 10.7 | 1.07 | 9.7 | 0.216 |
| Example 45 | Li_{1.07}P_{0.04}Ni_{0.49}Mn_{1.47}O₄ | 0.07 | 0.04 | 2.58 | 6.2 | 1.23 | 6.2 | 0.540 |
| Example 46 | Li_{1.07}P_{0.04}Ni_{0.49}Mn_{1.47}O₄ | 0.07 | 0.04 | 2.64 | 7.8 | 1.21 | 6.8 | 0.503 |
| Example 47 | Li_{1.07}P_{0.04}Ni_{0.49}Mn_{1.47}O₄ | 0.07 | 0.04 | 2.78 | 8.5 | 1.15 | 6.9 | 0.423 |
| Example 48 | Li_{1.07}P_{0.04}Ni_{0.49}Mn_{1.47}O₄ | 0.07 | 0.04 | 2.95 | 9.3 | 1.07 | 7.2 | 0.397 |
| Example 49 | Li_{1.07}P_{0.04}Ni_{0.49}Mn_{1.47}O₄ | 0.07 | 0.04 | 2.66 | 8.3 | 1.23 | 6.1 | 0.541 |
| Example 50 | Li_{1.07}P_{0.04}Ni_{0.49}Mn_{1.47}O₄ | 0.07 | 0.04 | 2.55 | 7.1 | 1.17 | 6.6 | 0.469 |
| Example 51 | Li_{1.07}P_{0.04}Ni_{0.49}Mn_{1.47}O₄ | 0.07 | 0.04 | 2.51 | 6.8 | 1.13 | 6.9 | 0.439 |
| Example 52 | Li_{1.07}P_{0.04}Ni_{0.49}Mn_{1.47}O₄ | 0.07 | 0.04 | 2.26 | 4.4 | 1.25 | 5.9 | 0.598 |
| Example 53 | Li_{1.07}P_{0.04}Ni_{0.49}Mn_{1.47}O₄ | 0.07 | 0.04 | 2.10 | 2.5 | 1.24 | 6.1 | 0.533 |
| Example 54 | Li_{1.07}P_{0.04}Ni_{0.49}Mn_{1.47}O₄ | 0.07 | 0.04 | 2.35 | 4.1 | 1.23 | 6.2 | 0.546 |
| Example 55 | Li_{1.07}P_{0.04}Ni_{0.49}Mn_{1.47}O₄ | 0.07 | 0.04 | 2.42 | 5.7 | 1.23 | 6.3 | 0.522 |
| Example 56 | Li_{1.07}P_{0.04}Ni_{0.49}Mn_{1.47}O₄ | 0.07 | 0.04 | 2.37 | 3.3 | 1.25 | 6.0 | 0.567 |
| Example 57 | Li_{1.07}P_{0.04}Ni_{0.49}Mn_{1.47}O₄ | 0.07 | 0.04 | 2.12 | 1.4 | 1.23 | 6.2 | 0.526 |
| Example 58 | Li_{1.07}P_{0.04}Ni_{0.49}Mn_{1.47}O₄ | 0.07 | 0.04 | 2.42 | 3.5 | 1.20 | 6.5 | 0.482 |
| Example 59 | Li_{1.07}P_{0.03}Ce_{0.01}Ni_{0.49}Mn_{1.47}O_{3.8}F_{0. 2} | 0.07 | 0.04 | 2.57 | 5.8 | 1.04 | 6.9 | 0.411 |
| Example 60 | Li_{1.06}P_{0.04}Ni_{0.48}Mn_{1.47}Cr_{0.02}O_{3.9}I_{0.1} | 0.06 | 0.04 | 2.46 | 5.2 | 1.01 | 6.7 | 0.455 |
| Example 61 | Li_{1.09}Na_{0.02}Si_{0.02}Ni_{0.48}Mn_{1.47}Ti_{0.02} O_{3.9}F_{0.1} | 0.09 | 0.04 | 2.41 | 4.3 | 1.13 | 6.5 | 0.433 |
| Comparati ve Example 9 | Li_{1.0}Ni_{0.5}Mn_{1.5}O₄ | 0.00 | 0.00 | 2.05 | 2.3 | 0.52 | 6.2 | 0.535 |
| Comparati ve Example 10 | Li_{1.07}P_{0.04}Ni_{0.49}Mn_{1.47}O₄ | 0.07 | 0.04 | 2.72 | 8.6 | 1.25 | 6.1 | 0.566 |

**Table 3: Performance parameters of batteries of examples and comparative examples**

| Sample No. | Compositions of positive electrode active material | Energy density of material to graphite (Wh/kg) | Cycling @ 45°C (cls) | Full-charge storage @ 45°C (d) | overall electrical performance coefficient K |
|---|---|---|---|---|---|
| Comparative Example 1 | Li_{1.0}Ni_{0.5}Mn_{1.5}O₄ | 593 | 204 | 93 | 181 |
| Comparative Example 2 | Li_{1.07}Ni_{0.5}Mn_{1.5}O₄ | 588 | 218 | 128 | 209 |
| Example 1 | Li_{1.0}Ni_{0.5}Mn_{1.5}O₄ | 569 | 318 | 176 | 231 |
| Example 2 | Li_{0.97}Ni_{0.5}Mn_{1.5}O₄ | 576 | 286 | 159 | 230 |
| Example 3 | Li_{1.07}P_{0.04}Ni_{0.49}Mn_{1.47}O₄ | 581 | 443 | 258 | 388 |
| Example 4 | Li_{1.07}P_{0.03}Te_{0.01}Ni_{0.49}Mn_{1.47}O₄ | 579 | 437 | 274 | 389 |
| Example 5 | Li_{1.07}P_{0.04}Ni_{0.49}Mn_{1.47}O₄ | 580 | 382 | 234 | 340 |
| Example 6 | Li_{1.07}Ru_{0.01}Ni_{0.5}Mn_{1.49}O₄ | 581 | 337 | 207 | 304 |
| Example 7 | Li_{1.07}Ce_{0.04}Ni_{0.49}Mn_{1.47}O₄ | 586 | 342 | 230 | 345 |
| Example 8 | Li_{1.07}P_{0.03}Ce_{0.01}Ni_{0.49}Mn_{1.47}O₄ | 584 | 452 | 281 | 426 |
| Example 9 | Li_{1.07}P_{0.03}Nb_{0.01}Ni_{0.49}Mn_{1.47}O₄ | 585 | 423 | 246 | 389 |
| Example 10 | Li_{1.07}P_{0.03}Ta_{0.01}Ni_{0.49}Mn_{1.47}O₄ | 578 | 422 | 253 | 362 |
| Example 11 | Li_{1.07}P_{0.03}W_{0.01}Ni_{0.49}Mn_{1.47}O₄ | 583 | 415 | 244 | 375 |
| Example 12 | Li_{1.07}Te_{0.02}Ce_{0.02}Ni_{0.49}Mn_{1.47}O₄ | 590 | 301 | 192 | 308 |
| Example 13 | Li_{1.07}Nb_{0.02}Ta_{0.02}Ni_{0.49}Mn_{1.47}O₄ | 591 | 309 | 181 | 305 |
| Example 14 | Li_{1.07}S_{0.03}W_{0.01}Ni_{0.49}Mn_{1.47}O₄ | 586 | 286 | 177 | 275 |
| Comparative Example 3 | Li_{1.07}Ni_{0.49}Mn_{1.5}Cr_{0.01}O₄ | 601 | 221 | 95 | 208 |
| Example 14 | Li_{1.07}P_{0.04}Ni_{0.48}Mn_{1.47}Cr_{0.01}O₄ | 591 | 371 | 197 | 348 |
| Example 15 | Li_{1.07}P_{0.03}Te_{0.01}Ni_{0.48}Mn_{1.46}Al_{0.02}O₄ | 593 | 369 | 211 | 368 |
| Example 16 | Li_{1.07}P_{0.03}Te_{0.01}Ni_{0.48}Mn_{1.47}Sb_{0.01}O₄ | 574 | 388 | 229 | 313 |
| Comparative Example 4 | Li_{1.07}Ni_{0.5}Mn_{1.5}O_{3.8}F_{0.2} | 598 | 206 | 102 | 201 |
| Example 17 | Li_{1.07}P_{0.04}Ni_{0.49}Mn_{1.47}O_{3.8}F_{0.2} | 601 | 374 | 224 | 415 |
| Example 18 | Li_{1.07}P_{0.04}Ni_{0.49}Mn_{1.47}O_{3.9}I_{0.1} | 591 | 390 | 231 | 388 |
| Example 19 | Li_{1.0}P_{0.03}Te_{0.01}Ni_{0.49}Mn_{1.47}O_{3.8}F_{0.2} | 601 | 401 | 229 | 434 |
| Example 20 | Li_{1.07}P_{0.03}Ce_{0.01}Ni_{0.49}Mn_{1.47}O_{3.8}F_{0.2} | 597 | 435 | 244 | 448 |
| Comparative Example 5 | Li_{1.07}Ni_{0.5}Mn_{1.48}Al_{0.02}O_{3.8}F_{0.2} | 599 | 219 | 105 | 212 |
| Example 21 | Li_{1.07}P_{0.04}Ni_{0.48}Mn_{1.47}Al_{0.02}O_{3.8}F_{0.2} | 596 | 362 | 216 | 381 |
| Example 22 | Li_{1.03}P_{0.06}Ni_{0.48}Mn_{1.46}O₄ | 568 | 528 | 298 | 382 |
| Example 23 | Li_{1.05}P_{0.05}Ni_{0.49}Mn_{1.46}O₄ | 572 | 542 | 317 | 423 |
| Example 24 | Li_{1.06}P_{0.03}Ni_{0.49}Mn_{1.48}O₄ | 579 | 454 | 268 | 391 |
| Example 25 | Li_{1.1}P_{0.01}Ni_{0.5}Mn_{1.49}O₄ | 574 | 371 | 238 | 313 |
| Example 26 | Li_{1.1}P_{0.005}Ni_{0.5}Mn_{1.495}O₄ | 571 | 316 | 196 | 251 |
| Example 27 | Li_{1.09}P_{0.003}Ni_{0.5}Mn_{1.497}O₄ | 569 | 292 | 189 | 231 |
| Example 28 | Li_{1.01}P_{0.01}Ni_{0.5}Mn_{1.49}O₄ | 573 | 408 | 293 | 363 |
| Example 29 | Li_{1.03}P_{0.03}Ni_{0.49}Mn_{1.48}O₄ | 565 | 453 | 301 | 343 |
| Example 30 | Li_{1.12}P_{0.04}Ni_{0.49}Mn_{1.47}O₄ | 554 | 502 | 257 | 274 |
| Example 31 | Li_{1.15}P_{0.04}Ni_{0.49}Mn_{1.47}O₄ | 548 | 496 | 256 | 242 |
| Example 32 | Li_{1.3}P_{0.04}Ni_{0.49}Mn_{1.47}O₄ | 543 | 506 | 287 | 232 |
| Comparative Example 6 | Li_{1.35}P_{0.04}Ni_{0.49}Mn_{1.47}O₄ | 516 | 413 | 158 | 58 |
| Example 33 | Li_{1.002}P_{0.002}Ni_{0.5}Mn_{1.498}O₄ | 563 | 426 | 231 | 280 |
| Example 34 | Li_{1.01}P_{0.01}Ni_{0.5}Mn_{1.49}O₄ | 569 | 434 | 258 | 328 |
| Example 35 | Li_{1.06}P_{0.06}Ni_{0.48}Mn_{1.46}O₄ | 564 | 505 | 309 | 359 |
| Example 36 | Li_{1.1}P_{0.1}Ni_{0.47}Mn_{1.43}O₄ | 551 | 594 | 369 | 340 |
| Example 37 | Li_{1.2}P_{0.2}Ni_{0.45}Mn_{1.35}O₄ | 536 | 682 | 434 | 279 |
| Comparative | Li_{1.24}P_{0.24}Ni_{0.44}Mn_{1.32}O₄ | 504 | 633 | 429 | 30 |
| Example 7 | | | | | |
| Comparative Example 8 | Li_{1.07}P_{0.04}Ni_{0.49}Mn_{1.47}O₄ | 592 | 172 | 128 | 197 |
| Example 38 | Li_{1.07}P_{0.04}Ni_{0.49}Mn_{1.47}O₄ | 607 | 254 | 201 | 351 |
| Example 39 | Li_{1.07}P_{0.04}Ni_{0.49}Mn_{1.47}O₄ | 595 | 376 | 233 | 400 |
| Example 40 | Li_{1.07}P_{0.04}Ni_{0.49}Mn_{1.47}O₄ | 569 | 492 | 305 | 380 |
| Example 41 | Li_{1.07}P_{0.04}Ni_{0.49}Mn_{1.47}O₄ | 562 | 522 | 303 | 350 |
| Example 42 | Li_{1.07}P_{0.04}Ni_{0.49}Mn_{1.47}O₄ | 551 | 593 | 364 | 337 |
| Example 43 | Li_{1.07}P_{0.04}Ni_{0.49}Mn_{1.47}O₄ | 588 | 430 | 275 | 431 |
| Example 44 | Li_{1.07}P_{0.04}Ni_{0.49}Mn_{1.47}O₄ | 567 | 485 | 306 | 367 |
| Example 45 | Li_{1.07}P_{0.04}Ni_{0.49}Mn_{1.47}O₄ | 577 | 442 | 288 | 392 |
| Example 46 | Li_{1.07}P_{0.04}Ni_{0.49}Mn_{1.47}O₄ | 571 | 457 | 301 | 376 |
| Example 47 | Li_{1.07}P_{0.04}Ni_{0.49}Mn_{1.47}O₄ | 567 | 490 | 319 | 378 |
| Example 48 | Li_{1.07}P_{0.04}Ni_{0.49}Mn_{1.47}O₄ | 562 | 542 | 332 | 374 |
| Example 49 | Li_{1.07}P_{0.04}Ni_{0.49}Mn_{1.47}O₄ | 568 | 483 | 312 | 376 |
| Example 50 | Li_{1.07}P_{0.04}Ni_{0.49}Mn_{1.47}O₄ | 573 | 441 | 288 | 371 |
| Example 51 | Li_{1.07}P_{0.04}Ni_{0.49}Mn_{1.47}O₄ | 575 | 428 | 269 | 362 |
| Example 52 | Li_{1.07}P_{0.04}Ni_{0.49}Mn_{1.47}O₄ | 598 | 338 | 215 | 376 |
| Example 53 | Li_{1.07}P_{0.04}Ni_{0.49}Mn_{1.47}O₄ | 604 | 299 | 196 | 359 |
| Example 54 | Li_{1.07}P_{0.04}Ni_{0.49}Mn_{1.47}O₄ | 597 | 361 | 225 | 393 |
| Example 55 | Li_{1.07}P_{0.04}Ni_{0.49}Mn_{1.47}O₄ | 593 | 385 | 233 | 396 |
| Example 56 | Li_{1.07}P_{0.04}Ni_{0.49}Mn_{1.47}O₄ | 601 | 382 | 228 | 423 |
| Example 57 | Li_{1.07}P_{0.04}Ni_{0.49}Mn_{1.47}O₄ | 608 | 296 | 196 | 372 |
| Example 58 | Li_{1.07}P_{0.04}Ni_{0.49}Mn_{1.47}O₄ | 597 | 404 | 249 | 437 |
| Example 59 | Li_{1.07}P_{0.03}Ce_{0.01}Ni_{0.49}Mn_{1.47}O_{3.8}F_{0.2} | 591 | 432 | 272 | 444 |
| Example 60 | Li_{1.06}P_{0.04}Ni_{0.48}Mn_{1.47}Cr_{0.02}O_{3.9}I_{0.1} | 595 | 418 | 263 | 448 |
| Example 61 | Li_{1.09}Na_{0.02}Si_{0.02}Ni_{0.48}Mn_{1.47}Ti_{0.02}O_{3.9}F_{0.1} | 598 | 423 | 250 | 452 |
| Comparative Example 9 | Li_{1.0}Ni_{0.5}Mn_{1.5}O₄ | 588 | 85 | 27 | 61 |
| Comparative Example 10 | Li_{1.07}P_{0.04}Ni_{0.49}Mn_{1.47}O₄ | 574 | 186 | 85 | 132 |

The results indicate that when the proportion of the Li content in the average composition of the spinel-type lithium-manganese-nickel-containing composite oxide is greater than 1, there is the M element for modification and the E value (I₁₁₁/I₄₀₀) of the obtained active material is greater than or equal to 2.3 and less than or equal to 3.0, the battery prepared by using this material as the positive electrode active material has good overall performance, specifically including good cycling performance, and high storage performance, energy density and overall electrical performance coefficient.

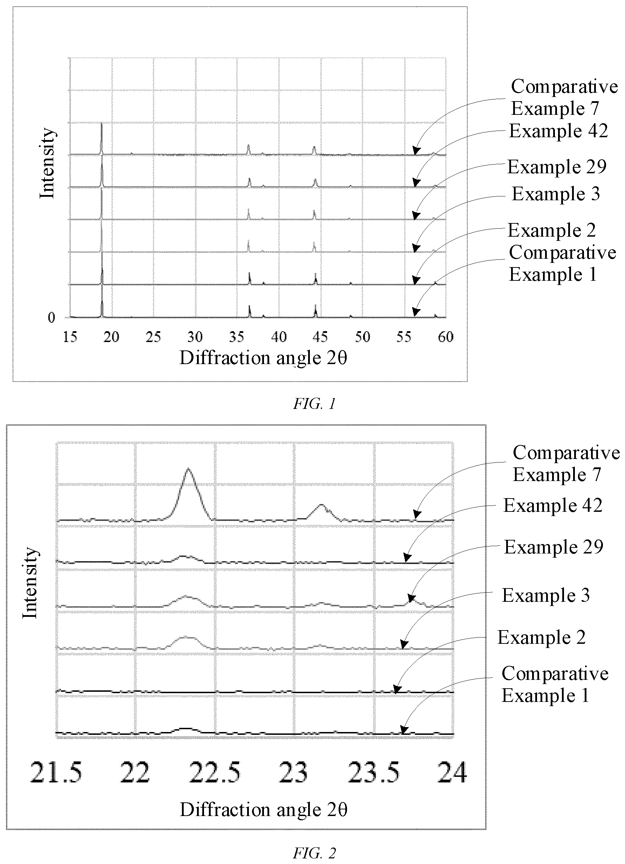

Referring to Fig.1 and Fig.2, Fig.1 and Fig.2 both are X-ray diffraction patterns of some of examples and comparative examples of the present application, specifically including X-ray diffraction pattern of Comparative Example 1, Example 2, Example 3, Example 29, Example 42, and Comparative Example 7. Referring to data of Tables 2 and 3 together, the E value of Comparative Example 1 is too small, so that the positive electrode material has poor stability, thereby leading to poor cycling performance and storage performance of the battery, and a lower overall electrical performance coefficient. As can be seen from Examples 1-2 and Comparative Example 1, when the E value is within the expected range (2.3-3.0), the energy density and the storage performance of the battery are improved, but the storage performance and the overall performance are not obviously improved. This indicates that controlling the range of the E value can improve the performance of the battery. However, due to the low lithium content in Examples 1-2, the overall performance of the battery is slightly lower, which indicates that the overall performance of the battery needs to be improved by comprehensively balancing a plurality of parameters. In other words, controlling the range of the E value can solve the technical problems of improving the stability of the positive electrode material and improving the battery capacity as proposed in the present application. In other words, the present application does not limit that the proportion of the Li content must be greater than 1, and the E value can be within the preset range when the proportion of the Li content is not greater than 1. As can be seen from Examples 3-4, when the E value is adjusted within the expected range and the proportion of the Li content is greater than 1, all performances of the batteries are obviously improved, thus providing the overall performance.

As can be seen from Examples 5-21 and Comparative Examples 3-5, adjusting the doping of the M, N, and Q elements in the lithium-manganese-nickel composite oxide can also regulate and improve the performance of the battery, and the doping of the M element can also adjust the E value within the preset range.

As can be seen from Examples 22-37 and Comparative Examples 6-7, reasonably adjusting the Li content and the M element content can improve the overall performance of the battery, so that the battery has good cycling performance, high storage performance, and higher energy density and overall electrical performance coefficient.

As can be seen from Examples 38-58 and Comparative Example 2, adjusting the preparation process of the lithium-manganese-nickel composite oxide can adjust and improve the performance of the battery, and also adjust the E value within the preset range. As can be seen from Example 42, even in the case of a high-temperature treatment, the E value can be controlled within the preset range, but there will be a high energy consumption due to the too high temperature. In other words, even without the preferred process, the performance of the oxide can be adjusted by only adjusting the composition and contents thereof.

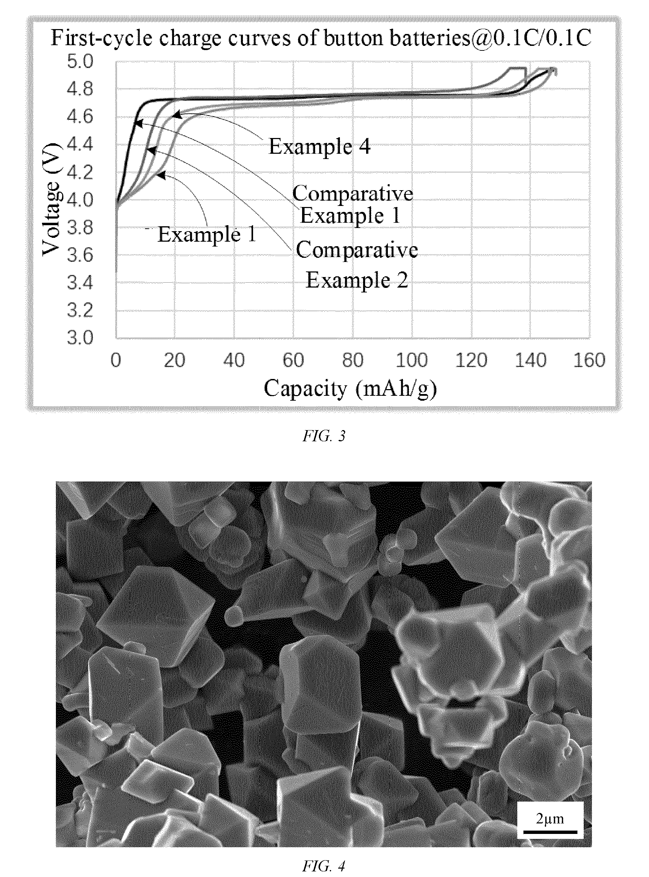

Referring to Fig.3, Fig.3 shows first-cycle charge curves of button batteries of some of examples and comparative examples of the present application, specifically including first-cycle charge curves of Comparative Example 1, Comparative Example 2, Example 1, and Example 4. Referring to data of Tables 2 and 3 together, as can be seen, by controlling the 4 V platform ratio R value of the positive electrode active material provided in the present application within the reasonable range, the battery has good overall performance.

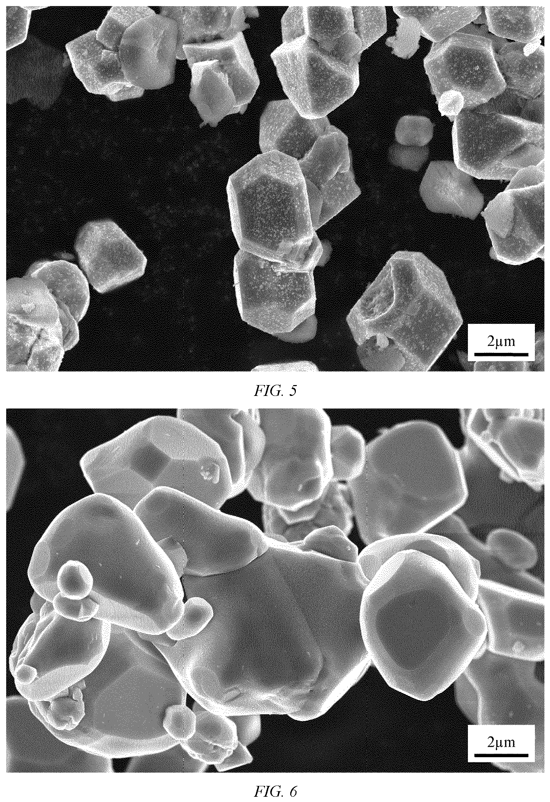

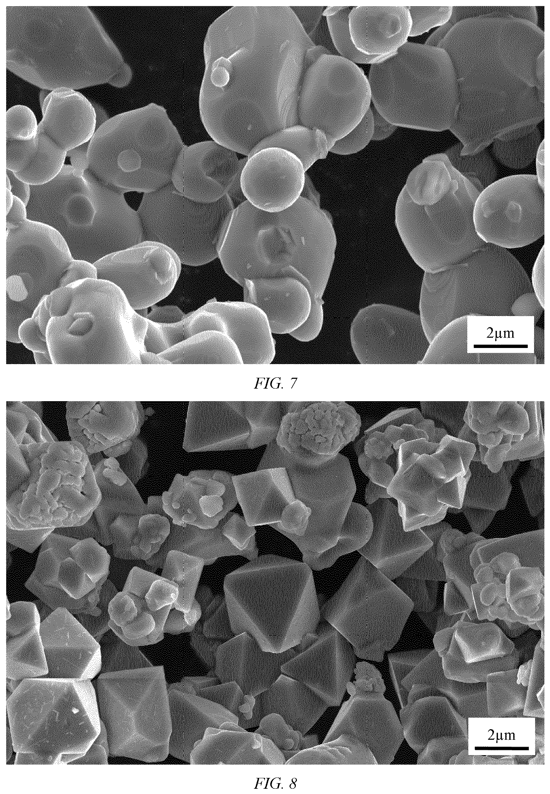

Referring to Fig.4-Fig.8, Fig.4 is a morphology image of a positive electrode active material of Example 3 of the present application tested by a scanning electron microscope; Fig.5 is a morphology image of a positive electrode active material of Example 36 of the present application achieved by a scanning electron microscope; Fig.6 is a morphology image of a positive electrode active material of Example 46 of the present application achieved by a scanning electron microscope; Fig.7 is a morphology image of a positive electrode active material of Example 47 of the present application achieved by a scanning electron microscope; Fig.8 is a morphology image of a positive electrode active material of Comparative Example 1 of the present application achieved by a scanning electron microscope. The positive electrode active material provided in the present application includes single crystal particles. Compared with the polycrystal of the same particle size, all the crystal planes on the surface of the single crystal particle are stable, and the single crystal has a small specific surface area and a lower probability of cracking and exposing unstable surfaces during processing and service, which is beneficial to slow down side reactions on the surface. Compared with the polycrystal of the same grain size, the single crystal is more beneficial to the dynamic performance due to its small particle size, and moreover, the single crystal has a low tendency to cracking.

The above descriptions are only embodiments of the present application, and do not limit the scope of the present application. Any equivalent structures or equivalent process transformations made by using the contents of the specification and accompanying drawings of the present application, either directly or indirectly applied in other related technical fields, are equally included in the scope of patent protection of the present application.

## Claims

1. A lithium-manganese-nickel composite oxide, wherein
the lithium-manganese-nickel composite oxide is in a spinel crystal form, and the ratio of the peak intensity I₁₁₁ of the (111) peak to the peak intensity I₄₀₀ of the (400) peak in an X-ray diffraction pattern of the lithium-manganese-nickel composite oxide is 2.1 ≤ I₁₁₁/I₄₀₀ ≤ 3.3, wherein the diffraction angle of the (111) peak is 2θ = 18° - 19.5°, and the diffraction angle of the (400) peak is 2θ = 43.5° - 45°.

2. The lithium-manganese-nickel composite oxide according to claim 1, wherein
the average chemical composition of the lithium-manganese-nickel composite oxide is Li₁₊ₐMₓNi_{0.5+z}Mn_{1.5-x-z}O₄₋ₖ, wherein 0 < a ≤ 0.3, 0 < x ≤ 0.2, -0.3 ≤ z ≤ 0.3, 0 ≤ k ≤ 0.2, and M includes one or more elements of Na, Si, P, S, Nb, Mo, Ru, Te, Ce, Ta, and W.

3. The lithium-manganese-nickel composite oxide according to claim 1 or 2, wherein
the average chemical composition of the lithium-manganese-nickel composite oxide is Li₁₊ₐMₓN_{y}Ni_{0.5+z}Mn_{1.5-x-y-z}O_{4-k-q}Q_{q}, wherein 0 < a ≤ 0.3, 0 < x ≤ 0.2, 0 ≤ y ≤ 0.3, -0.3 ≤ z ≤ 0.3, 0 ≤ k ≤ 0.2, 0 ≤ q ≤ 0.5, M includes one or more elements of Na, Si, P, S, Nb, Mo, Ru, Te, Ce, Ta, and W, N includes one or more elements of Mg, Al, K, Sc, Ti, V, Cr, Fe, Co, Rb, Sr, Y, Zr, Rh, Sb, La, Sm, Gd, Yb, Lu, and Hf, and Q includes one or more elements of F, Cl, Br, and I.

4. The lithium-manganese-nickel composite oxide according to claim 2 or 3, wherein 1 ≤ a/x ≤ 20.

5. The lithium-manganese-nickel composite oxide according to any one of claims 2 to 4, wherein 0.03 ≤ a ≤ 0.15.

6. The lithium-manganese-nickel composite oxide according to any one of claims 2 to 5, wherein 0.002 ≤ x ≤ 0.1.

7. The lithium-manganese-nickel composite oxide according to any one of claims 2 to 6, wherein 0 < x + y + z ≤ 0.3.

8. The lithium-manganese-nickel composite oxide according to any one of claims 2 to 7, wherein 2.4 ≤ I₁₁₁/I₄₀₀ ≤ 2.8; 2 ≤ a/x ≤ 10; 0.05 ≤ a ≤ 0.12; 0.01 ≤ x ≤ 0.06; 0.005 ≤ y ≤ 0.05; 0.01 ≤ z ≤ 0.1; 0.01 ≤ x + y + z ≤ 0.1; 0.01 ≤ q ≤ 0.1; and 0 ≤ k ≤ 0.1.

9. The lithium-manganese-nickel composite oxide according to any one of claims 1 to 8, wherein
the lithium-manganese-nickel composite oxide has at least one peak at a diffraction angle of 2θ = 21.5° - 24°in the X-ray diffraction pattern, and the ratio of the intensity of the strongest peak at the diffraction angle of 2θ = 21.5° - 24° to the intensity of the (111) peak is 0 < I_{(21.5°-24°)}/I₁₁₁ ≤ 3%.

10. The lithium-manganese-nickel composite oxide according to any one of claims 1 to 9, wherein
when a battery having the lithium-manganese-nickel composite oxide as a positive electrode material and Li as a negative electrode material is charged at a charging rate of 0.1 C, the ratio of the charge capacity of the battery in a range of 3.5-4.4 V to a total charge capacity in a range of 3.5-4.95 V is less than or equal to 15%.

11. The lithium-manganese-nickel composite oxide according to any one of claims 1 to 10, wherein the lithium-manganese-nickel composite oxide comprises one or more of single crystal particles, quasi-single crystal particles, and polycrystal particles.

12. The lithium-manganese-nickel composite oxide according to claim 11, wherein the number of crystal grains contained in one single crystal particle/quasi-single crystal particle is 1 ≤ n ≤ 8.

13. The lithium-manganese-nickel composite oxide according to claim 11 or 12, wherein the crystal grains have a shape including any one or more of a spheroid, an octahedron, an octahedron-truncated regular shape, an octahedron with rounded edges, and/or an octahedron-truncated polyhedral regular shape with rounded edges.

14. The lithium-manganese-nickel composite oxide according to any one of claims 1 to 13, wherein the lithium-manganese-nickel composite oxide has a volume median particle size of 2 µm ≤ D_{V50} ≤ 20 µm.

15. The lithium-manganese-nickel composite oxide according to any one of claims 1 to 14, wherein the lithium-manganese-nickel composite oxide has a powder pH of 10 ≤ pH ≤ 12.

16. The lithium-manganese-nickel composite oxide according to any one of claims 1 to 15, wherein the lithium-manganese-nickel composite oxide has a specific surface area of 0 < BET ≤ 0.8 m²/g.

17. A positive electrode plate, comprising a positive electrode material and a positive electrode current collector, wherein the positive electrode material comprises a lithium-manganese-nickel composite oxide according to any one of claims 1 to 16.

18. A battery, comprising: a positive electrode plate, a separator, and a negative electrode plate, wherein the separator is located between the positive electrode plate and the negative electrode plate for isolation, and the positive electrode plate includes a positive electrode plate according to claim 17.

19. The battery according to claim 18, wherein the battery further comprises an electrolyte solution, and the electrolyte solution comprises a solvent including one or more of fluorocarbonates, fluorocarboxylates, sulfones, and fluoroethers.

20. A power consuming device, comprising a battery according to claim 18 or 19.

21. A method for preparing a lithium-manganese-nickel composite oxide, comprising:
providing a raw material of the lithium-manganese-nickel composite oxide; and
subjecting the raw material of the lithium-manganese-nickel composite oxide to a heat treatment under an oxygen-containing atmosphere to obtain the lithium-manganese-nickel composite oxide according to any one of claims 1 to 16.

22. The preparation method for a lithium-manganese-nickel composite oxide according to claim 21, wherein the subjecting the raw material of the lithium-manganese-nickel composite oxide to a heat treatment under an oxygen-containing atmosphere comprises:
heating the raw material of the lithium-manganese-nickel composite oxide to T1, and keeping the temperature for 2-50 h to obtain a lithium-manganese-nickel composite oxide intermediate, wherein 850°C ≤ T1 ≤ 1100°C.

23. The preparation method for a lithium-manganese-nickel composite oxide according to claim 22, wherein the method further comprises:
heating the lithium-manganese-nickel composite oxide intermediate to T2, and keeping the temperature for 0.5-20 h to obtain a lithium-manganese-nickel composite oxide preform, wherein T1-200°C ≤ T2 ≤ T1, and T2 ≥ 800°C.

24. The preparation method for a lithium-manganese-nickel composite oxide according to claim 23, wherein the method further comprises:
heating the lithium-manganese-nickel composite oxide preform to T3, and keeping the temperature for 5-30 h to obtain the lithium-manganese-nickel composite oxide, wherein 500°C ≤ T3 ≤ 800°C.

25. The preparation method for a lithium-manganese-nickel composite oxide according to any one of claims 21 to 24, wherein the providing a raw material of the lithium-manganese-nickel composite oxide comprises:
providing Li₂CO₃, Ni_{0.5+z}Mn_{1.5-x-z}(OH)₄₋₂ₓ and M_{b}O_{c} powders in a stoichiometric ratio according to a target composition of Li₁₊ₐMₓNi_{0.5+z}Mn_{1.5-x-z}O₄₋ₖ, and uniformly mixing same to obtain the raw material of the lithium-manganese-nickel composite oxide,
wherein 0 < a ≤ 0.3, 0 < x ≤ 0.2, -0.3 ≤ z ≤ 0.3, 0 ≤ k ≤ 0.2, and M includes one or more elements of sodium (Na), silicon (Si), phosphorus (P), sulfur (S), niobium (Nb), molybdenum (Mo), ruthenium (Ru), tellurium (Te), cerium (Ce), tantalum (Ta), and tungsten (W).
